# EUROPEAN PATENT SPECIFICATION

(11) **EP 4 342 233 B1**
(45) Date of publication and mention of the grant of the patent: **17.06.2026**
(21) Application number: 22726986.7
(22) Date of filing: 11.05.2022
(51) Int. Cl.: H04W 52/14, H04W 52/34, H04W 72/04, H04W 52/22, H04L 5/00, H04W 72/12, H04W 52/36, H04W 24/10, H04W 72/044

(54) **DYNAMIC POWER AGGREGATION**
DYNAMISCHE LEISTUNGSAGGREGATION
AGRÉGATION DE PUISSANCE DYNAMIQUE

(30) Priority: 17.05.2021 US 202117322748
(43) Date of publication of application: 27.03.2024
(73) Proprietor: Qualcomm Incorporated, San Diego, CA 92121-1714 (US)
(72) Inventor: TAKEDA, Kazuki, San Diego, CA 92121-1714 (US); GAAL, Peter, San Diego, CA 92121-1714 (US); MONTOJO, Juan, San Diego, CA 92121-1714 (US); RICO ALVARINO, Alberto, San Diego, CA 92121-1714 (US); SRIDHARAN, Gokul, San Diego, CA 92121-1714 (US); FONG, Gene, San Diego, CA 92121-1714 (US); CHEN, Wanshi, San Diego, CA 92121-1714 (US); LUO, Tao, San Diego, CA 92121-1714 (US)
(74) Representative: Jaeger, Michael David
(86) International application number: PCT/US2022/072249
(87) International publication number: WO 2022/246368

(56) References cited:
- US-A1- 2021 144 652
- US-B2- 8 774 853

## Description

### CROSS REFERENCES

The present Application for Patent claims priority to U.S. Patent Application No. 17/322,748 by Takeda et al., entitled "DYNAMIC POWER AGGREGATION," filed May 17, 2021; assigned to the assignee hereof.

### FIELD OF TECHNOLOGY

The following relates to wireless communications, including dynamic power aggregation.

### BACKGROUND

Wireless communications systems are widely deployed to provide various types of communication content such as voice, video, packet data, messaging, broadcast, and so on. These systems may be capable of supporting communication with multiple users by sharing the available system resources (e.g., time, frequency, and power). Examples of such multiple-access systems include fourth generation (4G) systems such as Long Term Evolution (LTE) systems, LTE-Advanced (LTE-A) systems, or LTE-A Pro systems, and fifth generation (5G) systems which may be referred to as New Radio (NR) systems. These systems may employ technologies such as code division multiple access (CDMA), time division multiple access (TDMA), frequency division multiple access (FDMA), orthogonal FDMA (OFDMA), or discrete Fourier transform spread orthogonal frequency division multiplexing (DFT-S-OFDM). A wireless multiple-access communications system may include one or more base stations or one or more network access nodes, each simultaneously supporting communication for multiple communication devices, which may be otherwise known as user equipment (UE).

In some wireless communications systems, a UE may communicate with multiple serving cells (e.g., associated with one or more base stations) in a carrier aggregation configuration to increase available bandwidth and data rates for the UE. In some cases, existing techniques for power management in carrier aggregation may be deficient.

US2021/144652 A1 describes a user equipment reporting for maximum permissible exposure mitigation.

US 8 774 853 B2 describes a radiation power level control system and method for a wireless communication device based on a tracked radiation history.

### SUMMARY

The described techniques relate to improved methods, and apparatuses that support dynamic power aggregation. Generally, a user equipment (UE) may use dynamic power aggregation techniques to perform instantaneous transmit power adjustments in an uplink carrier aggregation configuration. For example, the UE may dynamically adjust the instantaneous transmit power with network assistance, for example as configured by a base station. In some cases, the base station may configure a set of power aggregation parameters to control the instantaneous transmit power behavior of the UE. The UE may adjust the instantaneous transmit power in accordance with the power aggregation parameters configured by the base station. In some other cases, the base station may configure the UE to report one or more parameters to the base station. Based on the report, the base station may determine a power aggregation configuration for the UE in a time interval. In some other cases, the UE may be configured to scale the instantaneous transmit power for individual component carriers in the carrier aggregation configuration.

A method for wireless communications at a UE is described, as defined by claim 1.

A method for wireless communications at a base station is described, as defined by claim 10.

A communication apparatus is described, as defined by claim 15.

### BRIEF DESCRIPTION OF THE DRAWINGS

FIG. 1 illustrates an example of a wireless communications system that supports dynamic power aggregation in accordance with aspects of the present disclosure.
FIG. 2 illustrates an example of a wireless communication system that supports dynamic power aggregation in accordance with aspects of the present disclosure.
FIG. 3 illustrates an example of a timing diagram that supports dynamic power aggregation in accordance with aspects of the present disclosure.
FIG. 4 illustrates an example of a process flow that supports dynamic power aggregation in accordance with aspects of the present disclosure.
FIGs. 5 and 6 show block diagrams of devices that support dynamic power aggregation in accordance with aspects of the present disclosure.
FIG. 7 shows a block diagram of a communications manager that supports dynamic power aggregation in accordance with aspects of the present disclosure.
FIG. 8 shows a diagram of a system including a device that supports dynamic power aggregation in accordance with aspects of the present disclosure.
FIGs. 9 and 10 show block diagrams of devices that support dynamic power aggregation in accordance with aspects of the present disclosure.
FIG. 11 shows a block diagram of a communications manager that supports dynamic power aggregation in accordance with aspects of the present disclosure.
FIG. 12 shows a diagram of a system including a device that supports dynamic power aggregation in accordance with aspects of the present disclosure.
FIGs. 13 through 16 show flowcharts illustrating methods that support dynamic power aggregation in accordance with aspects of the present disclosure.

### DETAILED DESCRIPTION

A user equipment (UE) in a wireless communications system may communicate with multiple serving cells (e.g., associated with one or more base stations) in a carrier aggregation configuration to increase available bandwidth and data rates for the UE. Each serving cell may communicate with the UE on a respective component carrier in a respective frequency band. A UE may use a carrier aggregation configuration to increase data rates and data capacity for uplink transmissions.

In some instances, a UE may include one or more power amplifiers for transmitting on different component carriers or different frequency bands. For example, the UE may include multiple power amplifiers that may each be used to transmit on a component carrier or a frequency band. In some cases, a UE may use the multiple power amplifiers in combination (e.g., perform power aggregation) to increase an available transmit power. However, a combined or aggregated transmit power (e.g., the instantaneous transmit power) may exceed a power limit (e.g., a specific absorption rate (SAR) limit). To keep the average transmit power below the power limit (i.e., to maintain SAR compliance) the UE may dynamically adjust the instantaneous transmit power such that an average transmit power for a given time window does not exceed the power limit. However, in some cases, instantaneous transmit power adjustments performed by the UE may be unpredictable to a base station. As such, because the base station may determine transmission parameters (e.g., a modulation and coding scheme (MCS), multiple-input multiple-output (MIMO) layers, MIMO precoders, or bandwidth) based on the available UE instantaneous transmit power, unexpected transmit power adjustments may decrease uplink performance.

According to the techniques described herein, a UE may use dynamic power aggregation techniques to adjust the instantaneous transmit power 305 in an uplink carrier aggregation configuration. For example, the UE may dynamically adjust the instantaneous transmit power with network assistance, for example as configured by a base station. In some cases, the base station may configure a set of power aggregation parameters (e.g., a window size, an average maximum power, a duration associated with the average maximum power, a minimum guaranteed maximum power, a power scaling configuration) to control the instantaneous transmit power behavior of the UE. The UE may adjust the instantaneous transmit power in accordance with the power aggregation parameters configured by the base station. In some other cases, the base station may configure the UE to report one or more parameters (e.g., an average transmit power, a headroom, an instantaneous power history) to the base station. Based on the report, the base station may determine a power aggregation configuration for the UE in a time interval. In some other cases, the UE may be configured to scale the instantaneous transmit power for individual component carriers in the carrier aggregation configuration. In some instances, the dynamic power aggregation techniques may improve reliability and promote network efficiencies, among other advantages.

Aspects of the disclosure are initially described in the context of wireless communications systems. An example timing diagram and an example process flow illustrating aspects of the discussed techniques are then described. Aspects of the disclosure are further illustrated by and described with reference to apparatus diagrams, system diagrams, and flowcharts that relate to dynamic power aggregation.

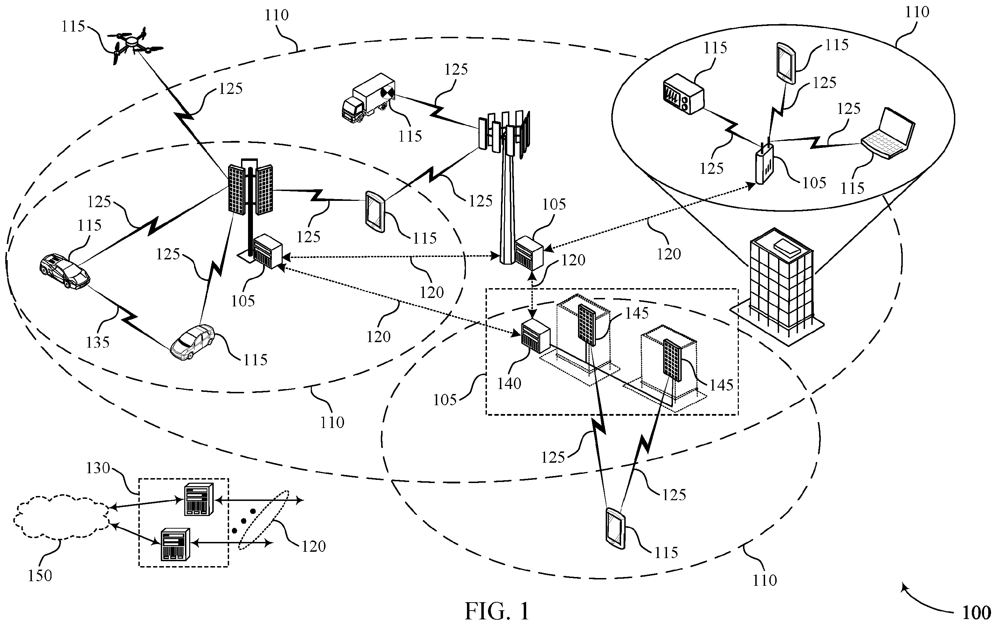

**FIG. 1** illustrates an example of a wireless communications system 100 that supports dynamic power aggregation in accordance with aspects of the present disclosure. The wireless communications system 100 may include one or more base stations 105, one or more UEs 115, and a core network 130. In some examples, the wireless communications system 100 may be a Long Term Evolution (LTE) network, an LTE-Advanced (LTE-A) network, an LTE-A Pro network, or a New Radio (NR) network. In some examples, the wireless communications system 100 may support enhanced broadband communications, ultra-reliable (e.g., mission critical) communications, low latency communications, communications with low-cost and low-complexity devices, or any combination thereof.

The base stations 105 may be dispersed throughout a geographic area to form the wireless communications system 100 and may be devices in different forms or having different capabilities. The base stations 105 and the UEs 115 may wirelessly communicate via one or more communication links 125. Each base station 105 may provide a coverage area 110 over which the UEs 115 and the base station 105 may establish one or more communication links 125. The coverage area 110 may be an example of a geographic area over which a base station 105 and a UE 115 may support the communication of signals according to one or more radio access technologies.

The UEs 115 may be dispersed throughout a coverage area 110 of the wireless communications system 100, and each UE 115 may be stationary, or mobile, or both at different times. The UEs 115 may be devices in different forms or having different capabilities. Some example UEs 115 are illustrated in FIG. 1. The UEs 115 described herein may be able to communicate with various types of devices, such as other UEs 115, the base stations 105, or network equipment (e.g., core network nodes, relay devices, integrated access and backhaul (IAB) nodes, or other network equipment), as shown in FIG. 1.

The base stations 105 may communicate with the core network 130, or with one another, or both. For example, the base stations 105 may interface with the core network 130 through one or more backhaul links 120 (e.g., via an S1, N2, N3, or other interface). The base stations 105 may communicate with one another over the backhaul links 120 (e.g., via an X2, Xn, or other interface) either directly (e.g., directly between base stations 105), or indirectly (e.g., via core network 130), or both. In some examples, the backhaul links 120 may be or include one or more wireless links.

One or more of the base stations 105 described herein may include or may be referred to by a person having ordinary skill in the art as a base transceiver station, a radio base station, an access point, a radio transceiver, a NodeB, an eNodeB (eNB), a next-generation NodeB or a giga-NodeB (either of which may be referred to as a gNB), a Home NodeB, a Home eNodeB, or other suitable terminology.

A UE 115 may include or may be referred to as a mobile device, a wireless device, a remote device, a handheld device, or a subscriber device, or some other suitable terminology, where the "device" may also be referred to as a unit, a station, a terminal, or a client, among other examples. A UE 115 may also include or may be referred to as a personal electronic device such as a cellular phone, a personal digital assistant (PDA), a tablet computer, a laptop computer, or a personal computer. In some examples, a UE 115 may include or be referred to as a wireless local loop (WLL) station, an Internet of Things (IoT) device, an Internet of Everything (IoE) device, or a machine type communications (MTC) device, among other examples, which may be implemented in various objects such as appliances, or vehicles, meters, among other examples.

The UEs 115 described herein may be able to communicate with various types of devices, such as other UEs 115 that may sometimes act as relays as well as the base stations 105 and the network equipment including macro eNBs or gNBs, small cell eNBs or gNBs, or relay base stations, among other examples, as shown in FIG. 1.

The UEs 115 and the base stations 105 may wirelessly communicate with one another via one or more communication links 125 over one or more carriers. The term "carrier" may refer to a set of radio frequency spectrum resources having a defined physical layer structure for supporting the communication links 125. For example, a carrier used for a communication link 125 may include a portion of a radio frequency spectrum band (e.g., a bandwidth part (BWP)) that is operated according to one or more physical layer channels for a given radio access technology (e.g., LTE, LTE-A, LTE-A Pro, NR). Each physical layer channel may carry acquisition signaling (e.g., synchronization signals, system information), control signaling that coordinates operation for the carrier, user data, or other signaling. The wireless communications system 100 may support communication with a UE 115 using carrier aggregation or multi-carrier operation. A UE 115 may be configured with multiple downlink component carriers and one or more uplink component carriers according to a carrier aggregation configuration. Carrier aggregation may be used with both frequency division duplexing (FDD) and time division duplexing (TDD) component carriers.

In some examples (e.g., in a carrier aggregation configuration), a carrier may also have acquisition signaling or control signaling that coordinates operations for other carriers. A carrier may be associated with a frequency channel (e.g., an evolved universal mobile telecommunication system terrestrial radio access (E-UTRA) absolute radio frequency channel number (EARFCN)) and may be positioned according to a channel raster for discovery by the UEs 115. A carrier may be operated in a standalone mode where initial acquisition and connection may be conducted by the UEs 115 via the carrier, or the carrier may be operated in a non-standalone mode where a connection is anchored using a different carrier (e.g., of the same or a different radio access technology).

The communication links 125 shown in the wireless communications system 100 may include uplink transmissions from a UE 115 to a base station 105, or downlink transmissions from a base station 105 to a UE 115. Carriers may carry downlink or uplink communications (e.g., in an FDD mode) or may be configured to carry downlink and uplink communications (e.g., in a TDD mode).

A carrier may be associated with a particular bandwidth of the radio frequency spectrum, and in some examples the carrier bandwidth may be referred to as a "system bandwidth" of the carrier or the wireless communications system 100. For example, the carrier bandwidth may be one of a number of determined bandwidths for carriers of a particular radio access technology (e.g., 1.4, 3, 5, 10, 15, 20, 40, or 80 megahertz (MHz)). Devices of the wireless communications system 100 (e.g., the base stations 105, the UEs 115, or both) may have hardware configurations that support communications over a particular carrier bandwidth or may be configurable to support communications over one of a set of carrier bandwidths. In some examples, the wireless communications system 100 may include base stations 105 or UEs 115 that support simultaneous communications via carriers associated with multiple carrier bandwidths. In some examples, each served UE 115 may be configured for operating over portions (e.g., a sub-band, a BWP) or all of a carrier bandwidth.

Signal waveforms transmitted over a carrier may be made up of multiple subcarriers (e.g., using multi-carrier modulation (MCM) techniques such as orthogonal frequency division multiplexing (OFDM) or discrete Fourier transform spread OFDM (DFT-S-OFDM)). In a system employing MCM techniques, a resource element may consist of one symbol period (e.g., a duration of one modulation symbol) and one subcarrier, where the symbol period and subcarrier spacing are inversely related. The number of bits carried by each resource element may depend on the modulation scheme (e.g., the order of the modulation scheme, the coding rate of the modulation scheme, or both). Thus, the more resource elements that a UE 115 receives and the higher the order of the modulation scheme, the higher the data rate may be for the UE 115. A wireless communications resource may refer to a combination of a radio frequency spectrum resource, a time resource, and a spatial resource (e.g., spatial layers or beams), and the use of multiple spatial layers may further increase the data rate or data integrity for communications with a UE 115.

The time intervals for the base stations 105 or the UEs 115 may be expressed in multiples of a basic time unit which may, for example, refer to a sampling period of *Tₛ* = 1/(Δ*fₘₐₓ* · *N_{f}*) seconds, where Δ*fₘₐₓ* may represent the maximum supported subcarrier spacing, and *N_{f}* may represent the maximum supported discrete Fourier transform (DFT) size. Time intervals of a communications resource may be organized according to radio frames each having a specified duration (e.g., 10 milliseconds (ms)). Each radio frame may be identified by a system frame number (SFN) (e.g., ranging from 0 to 1023).

Each frame may include multiple consecutively numbered subframes or slots, and each subframe or slot may have the same duration. In some examples, a frame may be divided (e.g., in the time domain) into subframes, and each subframe may be further divided into a number of slots. Alternatively, each frame may include a variable number of slots, and the number of slots may depend on subcarrier spacing. Each slot may include a number of symbol periods (e.g., depending on the length of the cyclic prefix prepended to each symbol period). In some wireless communications systems 100, a slot may further be divided into multiple mini-slots containing one or more symbols. Excluding the cyclic prefix, each symbol period may contain one or more (e.g., *N_{f}*) sampling periods. The duration of a symbol period may depend on the subcarrier spacing or frequency band of operation.

A subframe, a slot, a mini-slot, or a symbol may be the smallest scheduling unit (e.g., in the time domain) of the wireless communications system 100 and may be referred to as a transmission time interval (TTI). In some examples, the TTI duration (e.g., the number of symbol periods in a TTI) may be variable. Additionally or alternatively, the smallest scheduling unit of the wireless communications system 100 may be dynamically selected (e.g., in bursts of shortened TTIs (sTTIs)).

Physical channels may be multiplexed on a carrier according to various techniques. A physical control channel and a physical data channel may be multiplexed on a downlink carrier, for example, using one or more of time division multiplexing (TDM) techniques, frequency division multiplexing (FDM) techniques, or hybrid TDM-FDM techniques. A control region (e.g., a control resource set (CORESET)) for a physical control channel may be defined by a number of symbol periods and may extend across the system bandwidth or a subset of the system bandwidth of the carrier. One or more control regions (e.g., CORESETs) may be configured for a set of the UEs 115. For example, one or more of the UEs 115 may monitor or search control regions for control information according to one or more search space sets, and each search space set may include one or multiple control channel candidates in one or more aggregation levels arranged in a cascaded manner. An aggregation level for a control channel candidate may refer to a number of control channel resources (e.g., control channel elements (CCEs)) associated with encoded information for a control information format having a given payload size. Search space sets may include common search space sets configured for sending control information to multiple UEs 115 and UE-specific search space sets for sending control information to a specific UE 115.

A macro cell generally covers a relatively large geographic area (e.g., several kilometers in radius) and may allow unrestricted access by the UEs 115 with service subscriptions with the network provider supporting the macro cell. A small cell may be associated with a lower-powered base station 105, as compared with a macro cell, and a small cell may operate in the same or different (e.g., licensed, unlicensed) frequency bands as macro cells. Small cells may provide unrestricted access to the UEs 115 with service subscriptions with the network provider or may provide restricted access to the UEs 115 having an association with the small cell (e.g., the UEs 115 in a closed subscriber group (CSG), the UEs 115 associated with users in a home or office). A base station 105 may support one or multiple cells and may also support communications over the one or more cells using one or multiple component carriers.

In some examples, a base station 105 may be movable and therefore provide communication coverage for a moving geographic coverage area 110. In some examples, different geographic coverage areas 110 associated with different technologies may overlap, but the different geographic coverage areas 110 may be supported by the same base station 105. In other examples, the overlapping geographic coverage areas 110 associated with different technologies may be supported by different base stations 105. The wireless communications system 100 may include, for example, a heterogeneous network in which different types of the base stations 105 provide coverage for various geographic coverage areas 110 using the same or different radio access technologies.

The wireless communications system 100 may support synchronous or asynchronous operation. For synchronous operation, the base stations 105 may have similar frame timings, and transmissions from different base stations 105 may be approximately aligned in time. For asynchronous operation, the base stations 105 may have different frame timings, and transmissions from different base stations 105 may, in some examples, not be aligned in time. The techniques described herein may be used for either synchronous or asynchronous operations.

Some UEs 115 may be configured to employ operating modes that reduce power consumption, such as half-duplex communications (e.g., a mode that supports one-way communication via transmission or reception, but not transmission and reception simultaneously). In some examples, half-duplex communications may be performed at a reduced peak rate. Other power conservation techniques for the UEs 115 include entering a power saving deep sleep mode when not engaging in active communications, operating over a limited bandwidth (e.g., according to narrowband communications), or a combination of these techniques. For example, some UEs 115 may be configured for operation using a narrowband protocol type that is associated with a defined portion or range (e.g., set of subcarriers or resource blocks (RBs)) within a carrier, within a guard-band of a carrier, or outside of a carrier.

The wireless communications system 100 may be configured to support ultra-reliable communications or low-latency communications, or various combinations thereof. For example, the wireless communications system 100 may be configured to support ultra-reliable low-latency communications (URLLC) or mission critical communications. The UEs 115 may be designed to support ultra-reliable, low-latency, or critical functions (e.g., mission critical functions). Ultra-reliable communications may include private communication or group communication and may be supported by one or more mission critical services such as mission critical push-to-talk (MCPTT), mission critical video (MCVideo), or mission critical data (MCData). Support for mission critical functions may include prioritization of services, and mission critical services may be used for public safety or general commercial applications. The terms ultra-reliable, low-latency, mission critical, and ultra-reliable low-latency may be used interchangeably herein.

In some examples, a UE 115 may also be able to communicate directly with other UEs 115 over a device-to-device (D2D) communication link 135 (e.g., using a peer-to-peer (P2P) or D2D protocol). One or more UEs 115 utilizing D2D communications may be within the geographic coverage area 110 of a base station 105. Other UEs 115 in such a group may be outside the geographic coverage area 110 of a base station 105 or be otherwise unable to receive transmissions from a base station 105. In some examples, groups of the UEs 115 communicating via D2D communications may utilize a one-to-many (1:M) system in which each UE 115 transmits to every other UE 115 in the group. In some examples, a base station 105 facilitates the scheduling of resources for D2D communications. In other cases, D2D communications are carried out between the UEs 115 without the involvement of a base station 105.

The core network 130 may provide user authentication, access authorization, tracking, Internet Protocol (IP) connectivity, and other access, routing, or mobility functions. The core network 130 may be an evolved packet core (EPC) or 5G core (5GC), which may include at least one control plane entity that manages access and mobility (e.g., a mobility management entity (MME), an access and mobility management function (AMF)) and at least one user plane entity that routes packets or interconnects to external networks (e.g., a serving gateway (S-GW), a Packet Data Network (PDN) gateway (P-GW), or a user plane function (UPF)). The control plane entity may manage non-access stratum (NAS) functions such as mobility, authentication, and bearer management for the UEs 115 served by the base stations 105 associated with the core network 130. User IP packets may be transferred through the user plane entity, which may provide IP address allocation as well as other functions. The user plane entity may be connected to IP services 150 for one or more network operators. The IP services 150 may include access to the Internet, Intranet(s), an IP Multimedia Subsystem (IMS), or a Packet-Switched Streaming Service.

Some of the network devices, such as a base station 105, may include subcomponents such as an access network entity 140, which may be an example of an access node controller (ANC). Each access network entity 140 may communicate with the UEs 115 through one or more other access network transmission entities 145, which may be referred to as radio heads, smart radio heads, or transmission/reception points (TRPs). Each access network transmission entity 145 may include one or more antenna panels. In some configurations, various functions of each access network entity 140 or base station 105 may be distributed across various network devices (e.g., radio heads and ANCs) or consolidated into a single network device (e.g., a base station 105).

The wireless communications system 100 may operate using one or more frequency bands, typically in the range of 300 megahertz (MHz) to 300 gigahertz (GHz). Generally, the region from 300 MHz to 3 GHz is known as the ultra-high frequency (UHF) region or decimeter band because the wavelengths range from approximately one decimeter to one meter in length. The UHF waves may be blocked or redirected by buildings and environmental features, but the waves may penetrate structures sufficiently for a macro cell to provide service to the UEs 115 located indoors. The transmission of UHF waves may be associated with smaller antennas and shorter ranges (e.g., less than 100 kilometers) compared to transmission using the smaller frequencies and longer waves of the high frequency (HF) or very high frequency (VHF) portion of the spectrum below 300 MHz.

The wireless communications system 100 may also operate in a super high frequency (SHF) region using frequency bands from 3 GHz to 30 GHz, also known as the centimeter band, or in an extremely high frequency (EHF) region of the spectrum (e.g., from 30 GHz to 300 GHz), also known as the millimeter band. In some examples, the wireless communications system 100 may support millimeter wave (mmW) communications between the UEs 115 and the base stations 105, and EHF antennas of the respective devices may be smaller and more closely spaced than UHF antennas. In some examples, this may facilitate use of antenna arrays within a device. The propagation of EHF transmissions, however, may be subject to even greater atmospheric attenuation and shorter range than SHF or UHF transmissions. The techniques disclosed herein may be employed across transmissions that use one or more different frequency regions, and designated use of bands across these frequency regions may differ by country or regulating body.

The wireless communications system 100 may utilize both licensed and unlicensed radio frequency spectrum bands. For example, the wireless communications system 100 may employ License Assisted Access (LAA), LTE-Unlicensed (LTE-U) radio access technology, or NR technology in an unlicensed band such as the 5 GHz industrial, scientific, and medical (ISM) band. When operating in unlicensed radio frequency spectrum bands, devices such as the base stations 105 and the UEs 115 may employ carrier sensing for collision detection and avoidance. In some examples, operations in unlicensed bands may be based on a carrier aggregation configuration in conjunction with component carriers operating in a licensed band (e.g., LAA). Operations in unlicensed spectrum may include downlink transmissions, uplink transmissions, P2P transmissions, or D2D transmissions, among other examples.

A base station 105 or a UE 115 may be equipped with multiple antennas, which may be used to employ techniques such as transmit diversity, receive diversity, MIMO communications, or beamforming. The antennas of a base station 105 or a UE 115 may be located within one or more antenna arrays or antenna panels, which may support MIMO operations or transmit or receive beamforming. For example, one or more base station antennas or antenna arrays may be co-located at an antenna assembly, such as an antenna tower. In some examples, antennas or antenna arrays associated with a base station 105 may be located in diverse geographic locations. A base station 105 may have an antenna array with a number of rows and columns of antenna ports that the base station 105 may use to support beamforming of communications with a UE 115. Likewise, a UE 115 may have one or more antenna arrays that may support various MIMO or beamforming operations. Additionally or alternatively, an antenna panel may support radio frequency beamforming for a signal transmitted via an antenna port.

The base stations 105 or the UEs 115 may use MIMO communications to exploit multipath signal propagation and increase the spectral efficiency by transmitting or receiving multiple signals via different spatial layers. Such techniques may be referred to as spatial multiplexing. The multiple signals may, for example, be transmitted by the transmitting device via different antennas or different combinations of antennas. Likewise, the multiple signals may be received by the receiving device via different antennas or different combinations of antennas. Each of the multiple signals may be referred to as a separate spatial stream and may carry bits associated with the same data stream (e.g., the same codeword) or different data streams (e.g., different codewords). Different spatial layers may be associated with different antenna ports used for channel measurement and reporting. MIMO techniques include single-user MIMO (SU-MIMO), where multiple spatial layers are transmitted to the same receiving device, and multiple-user MIMO (MU-MIMO), where multiple spatial layers are transmitted to multiple devices.

Beamforming, which may also be referred to as spatial filtering, directional transmission, or directional reception, is a signal processing technique that may be used at a transmitting device or a receiving device (e.g., a base station 105, a UE 115) to shape or steer an antenna beam (e.g., a transmit beam, a receive beam) along a spatial path between the transmitting device and the receiving device. Beamforming may be achieved by combining the signals communicated via antenna elements of an antenna array such that some signals propagating at particular orientations with respect to an antenna array experience constructive interference while others experience destructive interference. The adjustment of signals communicated via the antenna elements may include a transmitting device or a receiving device applying amplitude offsets, phase offsets, or both to signals carried via the antenna elements associated with the device. The adjustments associated with each of the antenna elements may be defined by a beamforming weight set associated with a particular orientation (e.g., with respect to the antenna array of the transmitting device or receiving device, or with respect to some other orientation).

The wireless communications system 100 may be a packet-based network that operates according to a layered protocol stack. In the user plane, communications at the bearer or Packet Data Convergence Protocol (PDCP) layer may be IP-based. A Radio Link Control (RLC) layer may perform packet segmentation and reassembly to communicate over logical channels. A Medium Access Control (MAC) layer may perform priority handling and multiplexing of logical channels into transport channels. The MAC layer may also use error detection techniques, error correction techniques, or both to support retransmissions at the MAC layer to improve link efficiency. In the control plane, the Radio Resource Control (RRC) protocol layer may provide establishment, configuration, and maintenance of an RRC connection between a UE 115 and a base station 105 or a core network 130 supporting radio bearers for user plane data. At the physical layer, transport channels may be mapped to physical channels.

In some examples, a UE 115 may use dynamic power aggregation techniques to perform instantaneous transmit power adjustments in an uplink carrier aggregation configuration. For example, the UE 115 may dynamically adjust the instantaneous transmit power with network assistance. In some cases, a base station 105 may configure a set of power aggregation parameters to control the instantaneous transmit power behavior of the UE 115. The UE 115 may adjust the instantaneous transmit power in accordance with the power aggregation parameters configured by the base station 105. In some other cases, the base station may configure the UE 115 to report one or more parameters to the base station 105. Based on the report, the base station 105 may determine a power aggregation configuration for the UE 115 in a time interval. In some other cases, the UE 115 may be configured to scale the instantaneous transmit power for individual component carriers in the carrier aggregation configuration. In some instances, the dynamic power aggregation techniques may improve reliability and promote network efficiencies, among other advantages.

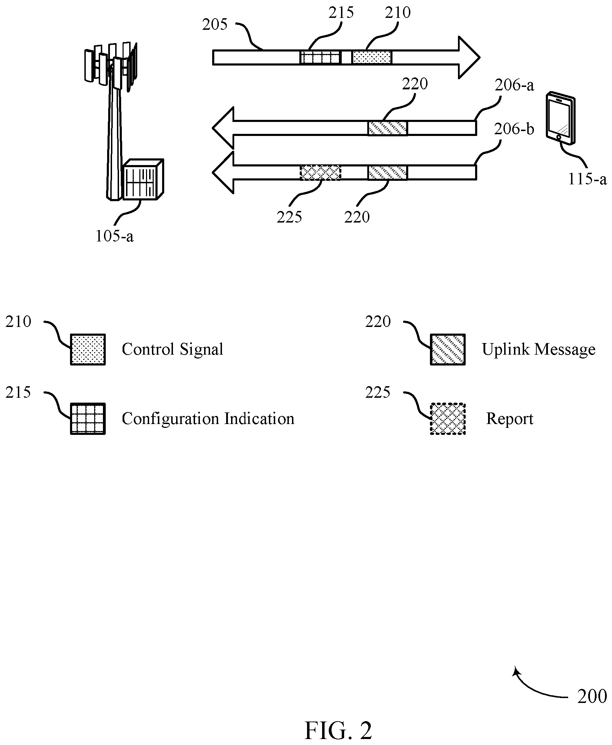

**FIG. 2** illustrates an example of a wireless communication system 200 that supports power aggregation techniques in accordance with aspects of the present disclosure. In some examples, the wireless communications system 200 may implement aspects of wireless communication system 100. For example, the wireless communications system 200 may include a base station 105-a and a UE 115-a, which may be examples of the corresponding devices described with reference to FIG. 1. The wireless communications system 200 may include features for dynamic power aggregation techniques to improve uplink carrier aggregation, among other benefits.

In the wireless communications system 200, the base station 105-a and the UE 115-a may communicate via a downlink component carrier 205 and one or more uplink component carriers 206. In some cases, the UE 115-a may use a carrier aggregation configuration associated with the uplink component carriers 206. For example, the UE 115-a may communicate on an uplink component carrier 206-a in a first frequency band and on an uplink component carrier 206-b in a second frequency band. The frequency bands may be associated with a frequency range (e.g., a frequency range FR1, which may include frequencies less than 6 GHz), where the first frequency band may include lower frequencies (e.g., less than 2 GHz) than the second frequency band (e.g., the second frequency band may include frequencies between 2 GHz and 6 GHz). Additionally or alternatively, the UE 115-a may communicate on the uplink component carriers 206 in a same frequency band.

The UE 115-a may include one or more antennas for transmitting on the uplink component carriers 206. For example, the UE 115-a may include two antennas for transmitting on the first uplink component carrier 206-a and four antennas for transmitting on the second uplink component carrier 206-b. In some examples, the UE 115-a may include power amplifiers to increase a transmit power of a signal. For example, the UE 115-a may use a first power amplifier to transmit signaling with a transmit power up to 23 decibel-milliwatts (dBm) on the first uplink component carrier 206-a, and the UE 115-a may use a second one or more power amplifiers to transmit signaling with a transmit power up to 26 dBm on the second uplink component carrier 206-b. Accordingly, using the carrier aggregation configuration, the UE 115-a may use the power amplifiers to transmit on the uplink component carriers 206-a and 206-b with transmit powers up to a hardware limit of 29 dBm (e.g., the sum of 23 dBm and 26 dBm). The hardware limit of the transmit power at the UE 115-a may be based on the power amplifiers included at the UE 115-a. In some examples, the UE 115-a may have a power class based on the hardware limit.

Each uplink component carrier 206 may operate in a duplexing mode. The uplink component carriers may operate in a same duplexing mode (e.g., TDD or FDD), or in different duplexing modes. For example, the uplink component carrier 206-a may operate in a TDD mode, and the uplink component carrier 206-b may operate in an FDD mode. In some examples a power limit for a component carrier 206 may be based on a duplexing mode of the uplink component carrier 206, where the power limit may be less than the hardware limit. For example, the UE 115-a may have a hardware limit of 26 dBm, and the uplink component carrier 206-a may have a power limit of 23 dBm if a quantity of uplink symbols (e.g., in a TDD mode) is greater than a threshold.

According to the techniques described herein, the UE 115-a may use dynamic power aggregation techniques to perform instantaneous transmit power adjustments in the carrier aggregation configuration for the uplink component carriers 206. For example, the UE 115-a may dynamically adjust the instantaneous transmit power with network assistance. In some cases, the base station 105-a may transmit a control signal 210 to the UE 115-a. The control signal 210 may schedule the UE 115-a to transmit one or more uplink messages 220 using the uplink component carriers 206 in the carrier aggregation configuration. In some examples, the base station 105-a may transmit the control signal 210 in RRC signaling, a MAC control element (MAC-CE), a downlink control information (DCI) message, or any combination thereof.

The base station 105-a may also transmit a configuration indication 215, which may indicate a set of power aggregation parameters to control the instantaneous transmit power behavior of the UE 115-a. The UE 115-a may adjust the instantaneous transmit power for the uplink message 220 in accordance with the power aggregation parameters indicated in the configuration indication 215. In some other cases, the base station may configure the UE 115-a to transmit a report 225 including one or more parameters. Based on the report 225, the base station 105-a may determine a power aggregation configuration for the UE 115-a in a time interval. In some other cases, the UE 115-a may be configured to separately scale the instantaneous transmit power for individual uplink component carriers 206 in the carrier aggregation configuration. Based on the power aggregation configuration, the UE 115-a may transmit the uplink message 220 using the uplink component carriers 206, which may improve reliability for the uplink message 220, among other benefits.

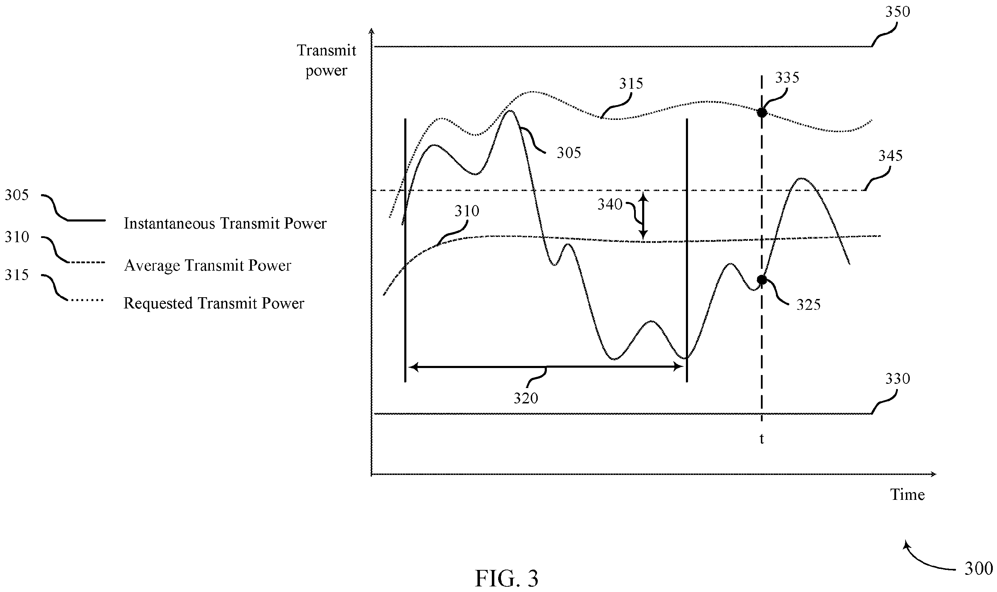

**FIG. 3** illustrates an example of a timing diagram 300 that supports dynamic power aggregation in accordance with examples as disclosed herein. In some examples, the timing diagram 300 may implement or be implemented by aspects of wireless communication systems 100 and 200. For example, the timing diagram 300 may be associated with communications between a base station and a UE, which may be examples of corresponding devices described with reference to FIGs. 1 and 2.

The timing diagram 300 may illustrate dynamic power aggregation techniques used by the UE to perform adjustments for an instantaneous transmit power 305 for uplink transmissions at the UE. The timing diagram 300 may include representations of the instantaneous transmit power 305 (which may be referred to as Pᵢₙₛₜ), an average transmit power 310 (which may be referred to as Pₐᵥₑ), and a requested transmit power 315 (which may be referred to as P_{req}) as functions of time. In some cases, the instantaneous transmit power 305 may be used by the UE for uplink transmissions in an uplink carrier aggregation configuration. The average transmit power 310 may illustrate the instantaneous transmit power 305 averaged over a time interval, such as a window 320. For example, the average transmit power 310 at a time t (e.g., Pₐᵥₑ(t)) may be obtained by averaging the instantaneous transmit power 305 within the window 320. That is, the UE may average Pᵢₙₛₜ(t') within a time interval t-W-D < t' < t-D, where W may be a size of the window 320 and D may be a gap between the end of the window 320 and the time t. In some examples, the gap D may be zero. The requested transmit power 315 may illustrate a transmit power that a base station requests the UE to use for uplink transmissions. In some cases, the UE may use a set transmit power 325, which may represent the instantaneous transmit power 305 at the time t (e.g., Pᵢₙₛₜ(t)), such that the average transmit power 310 (e.g., Pₐᵥₑ(t)) is less than or equal to an average power limit 345 (e.g., an SAR limit to maintain SAR compliance, which may be referred to as P_{ave_lim}). The set power 325 may be less than or equal to a hardware limit 350 (e.g., 29 dBm), where the hardware limit 350 may be based on power amplifiers included at the UE.

In some examples, the set transmit power 325 used by the UE at the time t may be unpredictable to the base station. For example, at time t the UE may determine the set transmit power 325 based on the average power limit 345, rather than based on a power allocation formula. The set transmit power 325 may be different from a requested power 335, which may represent the requested transmit power 315 at the time t (e.g., P_{req}(t)). Because the base station may determine transmission parameters (e.g., an MCS, MIMO layers, MIMO precoders, or bandwidth) based on the instantaneous transmit power 305, unexpected adjustments away from the requested power 335 may decrease uplink performance.

According to the techniques described herein, the UE may use dynamic power aggregation techniques to adjust the instantaneous transmit power 305 in an uplink carrier aggregation configuration. In some examples, the base station may indicate to the UE one or more power aggregation parameters for controlling the instantaneous transmit power 305. For example, the power aggregation parameters may include the size W of the window 320, the average power limit 345, a guaranteed power 330 (e.g., a minimum guaranteed maximum transmit power) for the UE when the instantaneous transmit power 305 is less than the average power limit 345, or any combination thereof.

According to the invention, the power aggregation parameters include a maximum duration in which the instantaneous transmit power 305 may exceed the average power limit 345. Additionally or alternatively, the base station may configure a power scaling strategy for the instantaneous transmit power 305 across component carriers or frequency bands of the uplink carrier aggregation configuration. For example, when the UE scales down the set transmit power 325 from a minimum of the average power limit 345 or the requested power 335, the UE may use an equal scaling across the component carriers or frequency bands, the UE may use a weighted scaling across the component carriers or frequency bands, or the UE may use a scaling according to an order (e.g., a predefined order) of the component carriers or frequency bands. The UE may control the instantaneous transmit power 305 based on the power aggregation parameters or the power scaling strategy indicated by the base station.

In some examples, the UE may be configured to transmit a report to the base station, where the report may include one or more parameters associated with the average transmit power 310. The parameters may include the average transmit power 310 at the time t (e.g., Pₐᵥₑ(t)), a headroom (e.g., a difference) between the average power limit 345 and the average transmit power 310 at the time t (e.g., P_{ave_lim} - Pₐᵥₑ(t)), a history of the instantaneous transmit power 305, or any combination thereof. The reported history of the instantaneous transmit power may include one or more statistical parameters of the instantaneous transmit power 305 (e.g., a cumulative distribution function (CDF), a probability density function (PDF), or another statistical parameter), a statistical parameter associated with uplink data transmission activity (e.g., a ratio between uplink data transmission and downlink transmission in the window 320), or any combination thereof. In some examples, the UE may transmit the report in RRC signaling, a MAC-CE, an uplink control information (UCI) message, or any combination thereof. For example, the UE may transmit the report according a periodicity configured via RRC signaling or based on triggering signaling (e.g., DCI) at the physical layer. In some examples, the UE may transmit a respective report for each cell, each frequency band, or each cell group. Additionally or alternatively, the UE may transmit a single report for all component carriers and frequency bands.

In some examples, if the requested power 335 at the time t is greater than the set transmit power 325, the UE may scale the transmission power of one or more component carriers (e.g., in a frequency range) according to a power scaling configuration such that the actual transmission power does not exceed the set transmit power 325. In some examples, the UE may scale the transmission power of carriers based on a configured power (e.g., a total configured maximum output power, which may be referred to as P_{CMAX}) for a transmission occasion (e.g., P_{CMAX}(i), where i may be a symbol index at the time t). For example, the UE may set P_{CMAX}(i) = Pᵢₙₛₜ(t) (i.e., the set transmit power 325) and scale transmission power across the component carriers based on a respective channel type, a respective configuration, respective contents, or any combination thereof, of each component carrier in the uplink carrier aggregation configuration. Additionally or alternatively, if the UE determines Pᵢₙₛₜ(t) < P_{CMAX}(i), the UE may determine a different power scaling configuration.

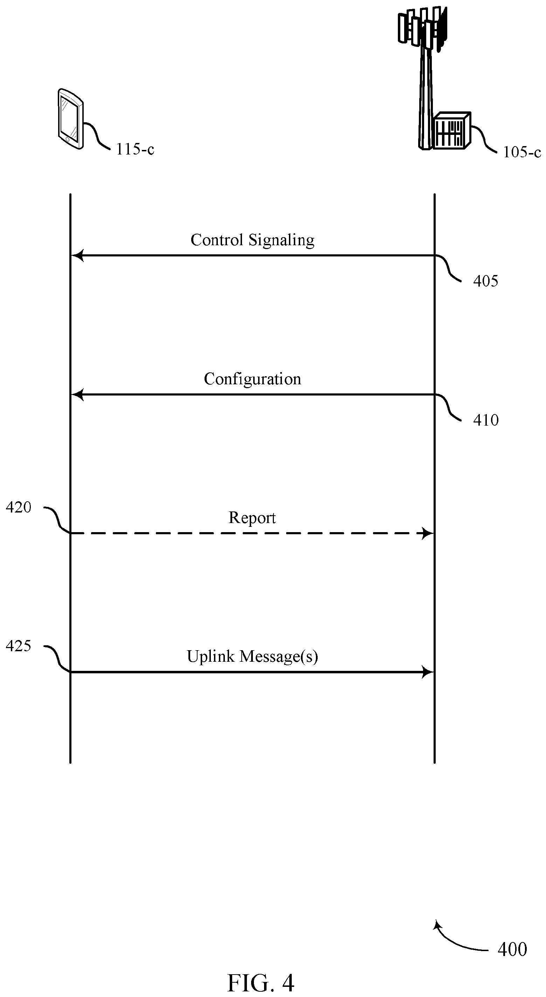

**FIG. 4** illustrates an example of a process flow 400 that supports dynamic power aggregation in accordance with aspects of the present disclosure. In some examples, the process flow 400 may implement one or more aspects of wireless communications systems 100 and 200. For example, the process flow 400 may include example operations associated with one or more of a base station 105-c or a UE 115-c, which may be examples of corresponding devices described with reference to FIGs. 1 and 2. In the following description of the process flow 400, the operations between the base station 105-c and the UE 115-c may be performed in a different order than the example order shown, or the operations performed by the base station 105-c and the UE 115-c may be performed in different orders or at different times. Some operations may also be omitted from the process flow 400, and other operations may be added to the process flow 400. The operations performed by the base station 105-c and the UE 115-c may support improvements to uplink carrier aggregation and, in some examples, may promote improvements to communications efficiency, among other benefits.

At 405, the base station 105-c may transmit control signaling to the UE 115-c. The control signaling may schedule the UE 115-c to transmit one or more uplink messages using one or more uplink component carriers in an uplink carrier aggregation configuration. In some examples, the base station 105-c may transmit the control signaling in RRC signaling, a MAC-CE, a DCI message, or any combination thereof.

At 410, the base station 105-c may transmit a configuration to the UE 115-c, which may indicate a set of power aggregation parameters to control instantaneous transmit power behavior of the UE 115-c. For example, the power aggregation parameters may include a size of a time interval, an average power limit, a guaranteed power (e.g., a minimum guaranteed maximum transmit power) for the UE 115-c when the instantaneous transmit power is less than the average power limit, or any combination thereof.

According to the invention, the power aggregation parameters include a maximum duration in which the instantaneous transmit power 305 may exceed the average power limit 345. Additionally or alternatively, the base station 105-c may configure a power scaling strategy for the instantaneous transmit power across component carriers or frequency bands of the uplink carrier aggregation configuration. For example, the UE 115-c may use an equal scaling across the component carriers or frequency bands, the UE 115-c may use a weighted scaling across the component carriers or frequency bands, or the UE 115-c may use a scaling according to an order (e.g., a predefined order) of the component carriers or frequency bands. The UE 115-c may control the instantaneous transmit power based on the power aggregation parameters or the power scaling strategy indicated by the base station 105-c.

In some examples, at 420 the UE 115-c may transmit a report to the base station 105-c, where the report may include one or more parameters associated with an average transmit power at the UE 115-c. The parameters may include the average transmit power at the time scheduled for the uplink message, a headroom (e.g., a difference) between the average power limit and the average transmit power at the time scheduled for the uplink message, a history of the instantaneous transmit power, or any combination thereof. The reported history of the instantaneous transmit power may include one or more statistical parameters of the instantaneous transmit power (e.g., a CDF, a PDF, or another statistical parameter), a statistical parameter associated with uplink data transmission activity (e.g., a ratio between uplink data transmission and downlink transmission in the time interval), or any combination thereof. In some examples, the UE 115-c may transmit the report in RRC signaling, a MAC-CE, an UCI message, or any combination thereof. For example, the UE 115-c may transmit the report according a periodicity configured via RRC signaling or based on triggering signaling (e.g., DCI) at the physical layer. In some examples, the UE 115-c may transmit a respective report for each cell, each frequency band, or each cell group. Additionally or alternatively, the UE 115-c may transmit a single report for all component carriers and frequency bands.

At 425, the UE 115-c may transmit the uplink message to the base station 105-c based on a power aggregation configuration, which may include the power aggregation parameters configured by the base station 105-c. The UE 115-c may transmit the uplink message using the uplink component carriers of the uplink carrier aggregation configuration. The operations performed by the base station 105-c and the UE 115-c may support improvements to dynamic power aggregation at the UE 115-c and, in some examples, may promote improvements to communications efficiency, among other benefits.

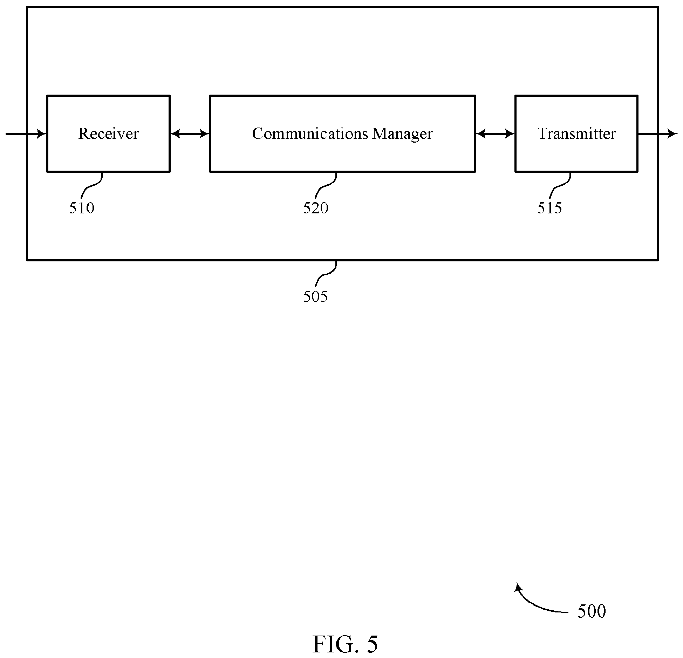

**FIG. 5** shows a block diagram 500 of a device 505 that supports dynamic power aggregation in accordance with aspects of the present disclosure. The device 505 may be an example of aspects of a UE 115 as described herein. The device 505 may include a receiver 510, a transmitter 515, and a communications manager 520. The device 505 may also include a processor. Each of these components may be in communication with one another (e.g., via one or more buses).

The receiver 510 may provide a means for receiving information such as packets, user data, control information, or any combination thereof associated with various information channels (e.g., control channels, data channels, information channels related to dynamic power aggregation). Information may be passed on to other components of the device 505. The receiver 510 may utilize a single antenna or a set of multiple antennas.

The transmitter 515 may provide a means for transmitting signals generated by other components of the device 505. For example, the transmitter 515 may transmit information such as packets, user data, control information, or any combination thereof associated with various information channels (e.g., control channels, data channels, information channels related to dynamic power aggregation). In some examples, the transmitter 515 may be co-located with a receiver 510 in a transceiver module. The transmitter 515 may utilize a single antenna or a set of multiple antennas.

The communications manager 520, the receiver 510, the transmitter 515, or various combinations thereof or various components thereof may be examples of means for performing various aspects of dynamic power aggregation as described herein. For example, the communications manager 520, the receiver 510, the transmitter 515, or various combinations or components thereof may support a method for performing one or more of the functions described herein.

In some examples, the communications manager 520, the receiver 510, the transmitter 515, or various combinations or components thereof may be implemented in hardware (e.g., in communications management circuitry). The hardware may include a processor, a digital signal processor (DSP), an application-specific integrated circuit (ASIC), a field-programmable gate array (FPGA) or other programmable logic device, a discrete gate or transistor logic, discrete hardware components, or any combination thereof configured as or otherwise supporting a means for performing the functions described in the present disclosure. In some examples, a processor and memory coupled with the processor may be configured to perform one or more of the functions described herein (e.g., by executing, by the processor, instructions stored in the memory).

Additionally or alternatively, in some examples, the communications manager 520, the receiver 510, the transmitter 515, or various combinations or components thereof may be implemented in code (e.g., as communications management software or firmware) executed by a processor. If implemented in code executed by a processor, the functions of the communications manager 520, the receiver 510, the transmitter 515, or various combinations or components thereof may be performed by a general-purpose processor, a DSP, a central processing unit (CPU), an ASIC, an FPGA, or any combination of these or other programmable logic devices (e.g., configured as or otherwise supporting a means for performing the functions described in the present disclosure).

In some examples, the communications manager 520 may be configured to perform various operations (e.g., receiving, monitoring, transmitting) using or otherwise in cooperation with the receiver 510, the transmitter 515, or both. For example, the communications manager 520 may receive information from the receiver 510, send information to the transmitter 515, or be integrated in combination with the receiver 510, the transmitter 515, or both to receive information, transmit information, or perform various other operations as described herein.

The communications manager 520 may support wireless communications at a UE in accordance with examples as disclosed herein. For example, the communications manager 520 may be configured as or otherwise support a means for receiving, from a base station, control signaling that schedules transmission of one or more uplink messages from the UE. The communications manager 520 may be configured as or otherwise support a means for receiving, from the base station, one or more power aggregation parameters pertaining to UE control of instantaneous transmit power within a time interval during which average maximum transmit power is limited. The communications manager 520 may be configured as or otherwise support a means for determining, based on the one or more power aggregation parameters, a power aggregation configuration for transmission of the one or more uplink messages. The communications manager 520 may be configured as or otherwise support a means for transmitting the one or more uplink messages in accordance with the power aggregation configuration and the control signaling.

By including or configuring the communications manager 520 in accordance with examples as described herein, the device 505 (e.g., a processor controlling or otherwise coupled to the receiver 510, the transmitter 515, the communications manager 520, or a combination thereof) may support techniques for efficient power consumption, more efficient utilization of communication resources, and improved reliability of uplink transmissions.

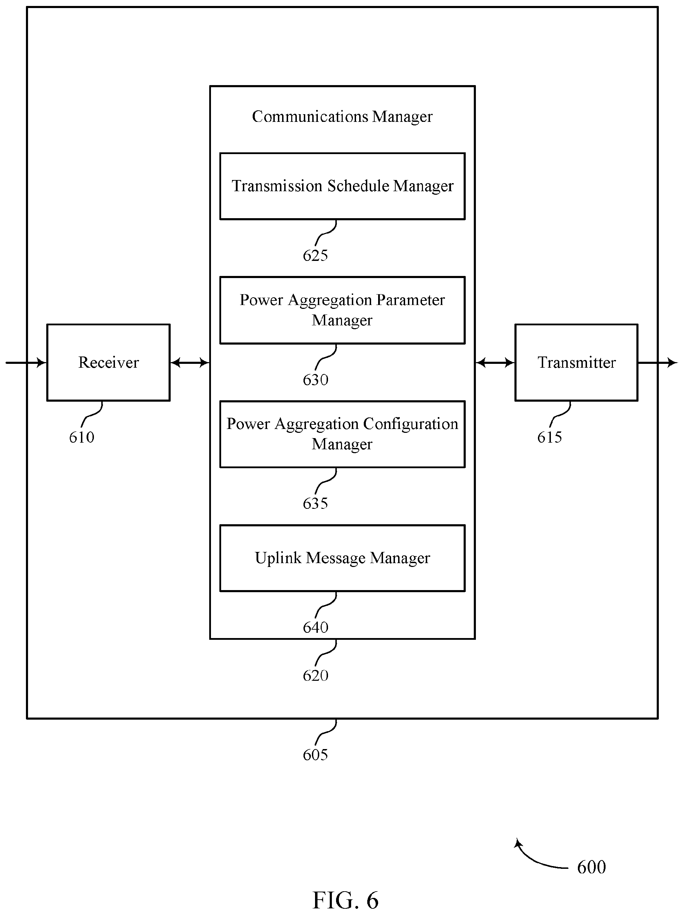

**FIG. 6** shows a block diagram 600 of a device 605 that supports dynamic power aggregation in accordance with aspects of the present disclosure. The device 605 may be an example of aspects of a device 505 or a UE 115 as described herein. The device 605 may include a receiver 610, a transmitter 615, and a communications manager 620. The device 605 may also include a processor. Each of these components may be in communication with one another (e.g., via one or more buses).

The receiver 610 may provide a means for receiving information such as packets, user data, control information, or any combination thereof associated with various information channels (e.g., control channels, data channels, information channels related to dynamic power aggregation). Information may be passed on to other components of the device 605. The receiver 610 may utilize a single antenna or a set of multiple antennas.

The transmitter 615 may provide a means for transmitting signals generated by other components of the device 605. For example, the transmitter 615 may transmit information such as packets, user data, control information, or any combination thereof associated with various information channels (e.g., control channels, data channels, information channels related to dynamic power aggregation). In some examples, the transmitter 615 may be co-located with a receiver 610 in a transceiver module. The transmitter 615 may utilize a single antenna or a set of multiple antennas.

The device 605, or various components thereof, may be an example of means for performing various aspects of dynamic power aggregation as described herein. For example, the communications manager 620 may include a transmission schedule manager 625, a power aggregation parameter manager 630, a power aggregation configuration manager 635, an uplink message manager 640, or any combination thereof. The communications manager 620 may be an example of aspects of a communications manager 520 as described herein. In some examples, the communications manager 620, or various components thereof, may be configured to perform various operations (e.g., receiving, monitoring, transmitting) using or otherwise in cooperation with the receiver 610, the transmitter 615, or both. For example, the communications manager 620 may receive information from the receiver 610, send information to the transmitter 615, or be integrated in combination with the receiver 610, the transmitter 615, or both to receive information, transmit information, or perform various other operations as described herein.

The communications manager 620 may support wireless communications at a UE in accordance with examples as disclosed herein. The transmission schedule manager 625 may be configured as or otherwise support a means for receiving, from a base station, control signaling that schedules transmission of one or more uplink messages from the UE. The power aggregation parameter manager 630 may be configured as or otherwise support a means for receiving, from the base station, one or more power aggregation parameters pertaining to UE control of instantaneous transmit power within a time interval during which average maximum transmit power is limited. The power aggregation configuration manager 635 may be configured as or otherwise support a means for determining, based on the one or more power aggregation parameters, a power aggregation configuration for transmission of the one or more uplink messages. The uplink message manager 640 may be configured as or otherwise support a means for transmitting the one or more uplink messages in accordance with the power aggregation configuration and the control signaling.

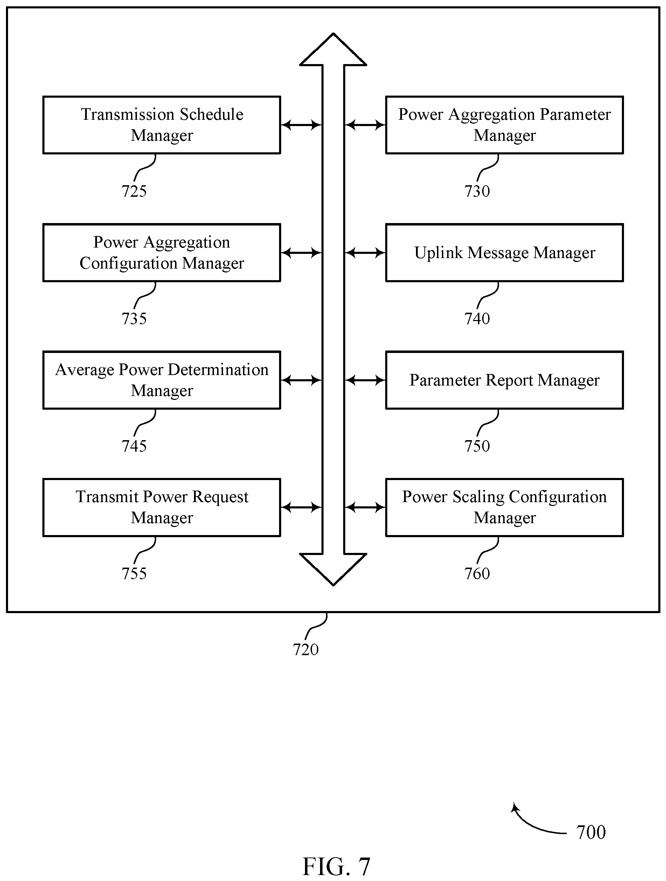

**FIG. 7** shows a block diagram 700 of a communications manager 720 that supports dynamic power aggregation in accordance with aspects of the present disclosure. The communications manager 720 may be an example of aspects of a communications manager 520, a communications manager 620, or both, as described herein. The communications manager 720, or various components thereof, may be an example of means for performing various aspects of dynamic power aggregation as described herein. For example, the communications manager 720 may include a transmission schedule manager 725, a power aggregation parameter manager 730, a power aggregation configuration manager 735, an uplink message manager 740, an average power determination manager 745, a parameter report manager 750, a transmit power request manager 755, a power scaling configuration manager 760, or any combination thereof. Each of these components may communicate, directly or indirectly, with one another (e.g., via one or more buses).

The communications manager 720 may support wireless communications at a UE in accordance with examples as disclosed herein. The transmission schedule manager 725 may be configured as or otherwise support a means for receiving, from a base station, control signaling that schedules transmission of one or more uplink messages from the UE. The power aggregation parameter manager 730 may be configured as or otherwise support a means for receiving, from the base station, one or more power aggregation parameters pertaining to UE control of instantaneous transmit power within a time interval during which average maximum transmit power is limited. The power aggregation configuration manager 735 may be configured as or otherwise support a means for determining, based on the one or more power aggregation parameters, a power aggregation configuration for transmission of the one or more uplink messages. The uplink message manager 740 may be configured as or otherwise support a means for transmitting the one or more uplink messages in accordance with the power aggregation configuration and the control signaling.

In some examples, to support receiving the one or more power aggregation parameters, the power aggregation parameter manager 730 may be configured as or otherwise support a means for receiving an indication of at least one of a size of the time interval or an average maximum transmit power limit for the time interval.

In some examples, to support receiving the one or more power aggregation parameters, the power aggregation parameter manager 730 may be configured as or otherwise support a means for receiving an indication of a minimum guaranteed maximum transmit power for transmissions below the average maximum transmit power limit.

According to the invention, to support receiving the one or more power aggregation parameters, the power aggregation parameter manager 730 is configured as or otherwise support a means for receiving an indication of a maximum duration during which the instantaneous transmit power is allowed to exceed an average maximum transmit power limit.

In some examples, to support receiving the one or more power aggregation parameters, the power aggregation parameter manager 730 may be configured as or otherwise support a means for receiving an indication of a power scaling strategy to be used by the UE in applying the power aggregation configuration across multiple carriers or frequency bands.

In some examples, to support receiving the indication of the power scaling strategy, the power aggregation parameter manager 730 may be configured as or otherwise support a means for receiving an indication that the power scaling strategy is a strategy for scaling down the instantaneous transmit power equally across the multiple carriers or frequency bands, in accordance with a weighted scaling across the multiple carriers or frequency bands, or in accordance with a predefined order across the multiple carriers or frequency bands.

In some examples, the average power determination manager 745 may be configured as or otherwise support a means for determining an average transmit power associated with the time interval. In some examples, the parameter report manager 750 may be configured as or otherwise support a means for transmitting, to the base station, a report that includes one or more reported parameters that are based on the average transmit power.

In some examples, to support transmitting the report, the parameter report manager 750 may be configured as or otherwise support a means for transmitting the one or more reported parameters that are indicative of at least one of the average transmit power, a headroom parameter associated with a difference between the average transmit power and an average maximum transmit power limit, or a history of the instantaneous transmit power.

In some examples, the one or more reported parameters that are indicative of the history of the instantaneous transmit power includes a first statistical parameter associated with the instantaneous transmit power over time, a second statistical parameter associated with uplink data transmission activity over time, or a combination thereof.

In some examples, to support transmitting the report, the parameter report manager 750 may be configured as or otherwise support a means for transmitting the report via radio resource control signaling, a medium access control (MAC) control element (CE), an uplink control information message, or any combination thereof.

In some examples, the report is associated with a cell, a frequency band, a cell group, or any combination thereof.

In some examples, the transmit power request manager 755 may be configured as or otherwise support a means for receiving, from the base station, an indication of a requested transmit power for each of the one or more uplink messages across multiple carriers, where a total transmit power indicated across all of the multiple carriers exceeds the instantaneous transmit power. In some examples, the power scaling configuration manager 760 may be configured as or otherwise support a means for determining a power scaling configuration for transmission of the one or more uplink messages such that a total transmit power applied across all of the multiple carriers is equal to or less than the instantaneous transmit power.

In some examples, the power scaling configuration includes a first power scaling parameter associated with a first carrier or band of a carrier aggregation configuration at the UE and a second power scaling parameter associated with a second carrier or band of the carrier aggregation configuration at the UE.

In some examples, the power scaling configuration is determined based on a total configured maximum output power for a transmission occasion associated with transmission of the one or more uplink messages.

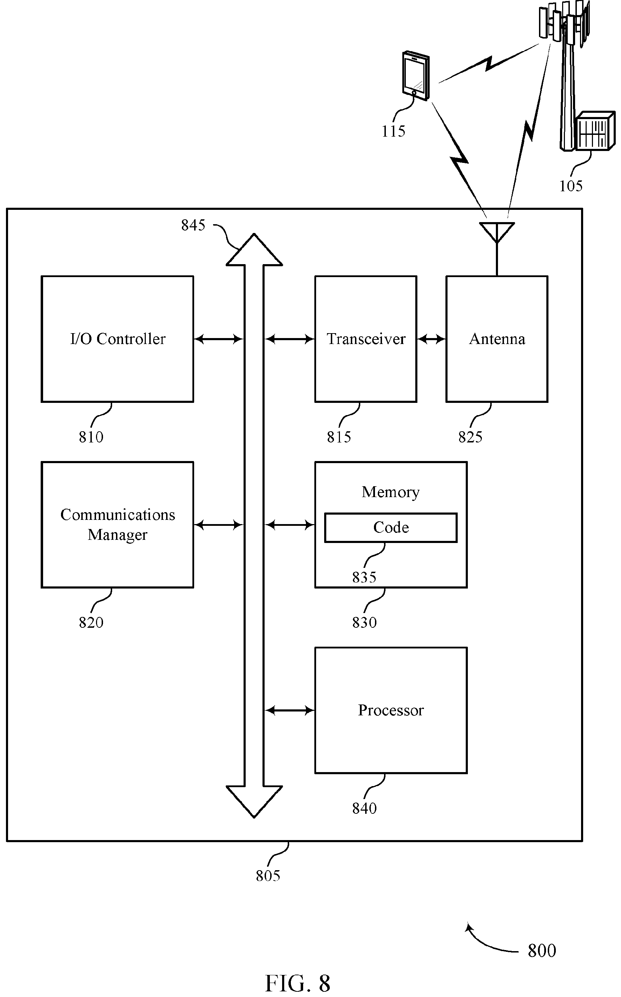

**FIG.** 8 shows a diagram of a system 800 including a device 805 that supports dynamic power aggregation in accordance with aspects of the present disclosure. The device 805 may be an example of or include the components of a device 505, a device 605, or a UE 115 as described herein. The device 805 may communicate wirelessly with one or more base stations 105, UEs 115, or any combination thereof. The device 805 may include components for bi-directional voice and data communications including components for transmitting and receiving communications, such as a communications manager 820, an input/output (I/O) controller 810, a transceiver 815, an antenna 825, a memory 830, code 835, and a processor 840. These components may be in electronic communication or otherwise coupled (e.g., operatively, communicatively, functionally, electronically, electrically) via one or more buses (e.g., a bus 845).

The I/O controller 810 may manage input and output signals for the device 805. The I/O controller 810 may also manage peripherals not integrated into the device 805. In some cases, the I/O controller 810 may represent a physical connection or port to an external peripheral. In some cases, the I/O controller 810 may utilize an operating system such as iOS^{®}, ANDROID^{®}, MS-DOS^{®}, MS-WINDOWS^{®}, OS/2^{®}, UNIX^{®}, LINUX^{®}, or another known operating system. Additionally or alternatively, the I/O controller 810 may represent or interact with a modem, a keyboard, a mouse, a touchscreen, or a similar device. In some cases, the I/O controller 810 may be implemented as part of a processor, such as the processor 840. In some cases, a user may interact with the device 805 via the I/O controller 810 or via hardware components controlled by the I/O controller 810.

In some cases, the device 805 may include a single antenna 825. However, in some other cases, the device 805 may have more than one antenna 825, which may be capable of concurrently transmitting or receiving multiple wireless transmissions. The transceiver 815 may communicate bi-directionally, via the one or more antennas 825, wired, or wireless links as described herein. For example, the transceiver 815 may represent a wireless transceiver and may communicate bi-directionally with another wireless transceiver. The transceiver 815 may also include a modem to modulate the packets, to provide the modulated packets to one or more antennas 825 for transmission, and to demodulate packets received from the one or more antennas 825. The transceiver 815, or the transceiver 815 and one or more antennas 825, may be an example of a transmitter 515, a transmitter 615, a receiver 510, a receiver 610, or any combination thereof or component thereof, as described herein.

The memory 830 may include random access memory (RAM) and read-only memory (ROM). The memory 830 may store computer-readable, computer-executable code 835 including instructions that, when executed by the processor 840, cause the device 805 to perform various functions described herein. The code 835 may be stored in a non-transitory computer-readable medium such as system memory or another type of memory. In some cases, the code 835 may not be directly executable by the processor 840 but may cause a computer (e.g., when compiled and executed) to perform functions described herein. In some cases, the memory 830 may contain, among other things, a basic I/O system (BIOS) which may control basic hardware or software operation such as the interaction with peripheral components or devices.

The processor 840 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 840 may be configured to operate a memory array using a memory controller. In some other cases, a memory controller may be integrated into the processor 840. The processor 840 may be configured to execute computer-readable instructions stored in a memory (e.g., the memory 830) to cause the device 805 to perform various functions (e.g., functions or tasks supporting dynamic power aggregation). For example, the device 805 or a component of the device 805 may include a processor 840 and memory 830 coupled to the processor 840, the processor 840 and memory 830 configured to perform various functions described herein.

The communications manager 820 may support wireless communications at a UE in accordance with examples as disclosed herein. For example, the communications manager 820 may be configured as or otherwise support a means for receiving, from a base station, control signaling that schedules transmission of one or more uplink messages from the UE. The communications manager 820 may be configured as or otherwise support a means for receiving, from the base station, one or more power aggregation parameters pertaining to UE control of instantaneous transmit power within a time interval during which average maximum transmit power is limited. The communications manager 820 may be configured as or otherwise support a means for determining, based on the one or more power aggregation parameters, a power aggregation configuration for transmission of the one or more uplink messages. The communications manager 820 may be configured as or otherwise support a means for transmitting the one or more uplink messages in accordance with the power aggregation configuration and the control signaling.

By including or configuring the communications manager 820 in accordance with examples as described herein, the device 805 may support techniques for improved communication reliability, improved user experience related to reduced processing, reduced power consumption, more efficient utilization of communication resources, improved coordination between devices, and improved utilization of processing capability.

In some examples, the communications manager 820 may be configured to perform various operations (e.g., receiving, monitoring, transmitting) using or otherwise in cooperation with the transceiver 815, the one or more antennas 825, or any combination thereof. Although the communications manager 820 is illustrated as a separate component, in some examples, one or more functions described with reference to the communications manager 820 may be supported by or performed by the processor 840, the memory 830, the code 835, or any combination thereof. For example, the code 835 may include instructions executable by the processor 840 to cause the device 805 to perform various aspects of dynamic power aggregation as described herein, or the processor 840 and the memory 830 may be otherwise configured to perform or support such operations.

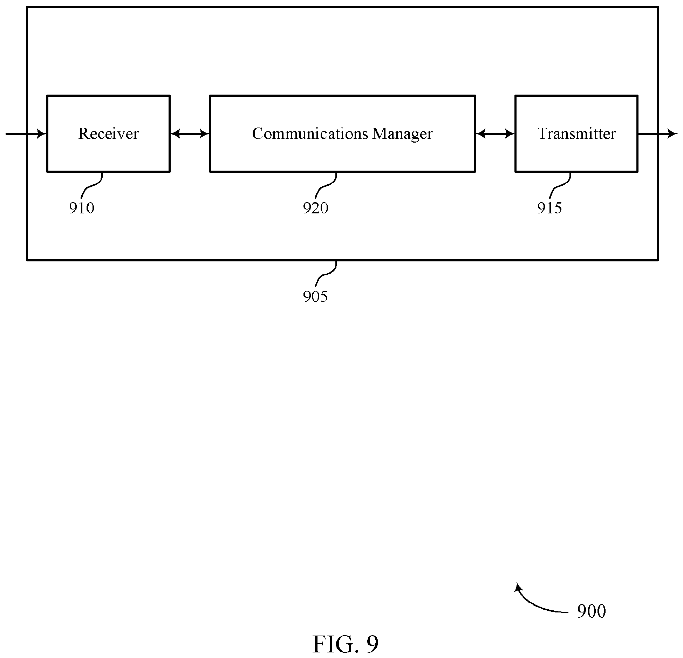

**FIG. 9** shows a block diagram 900 of a device 905 that supports dynamic power aggregation in accordance with aspects of the present disclosure. The device 905 may be an example of aspects of a base station 105 as described herein. The device 905 may include a receiver 910, a transmitter 915, and a communications manager 920. The device 905 may also include a processor. Each of these components may be in communication with one another (e.g., via one or more buses).

The receiver 910 may provide a means for receiving information such as packets, user data, control information, or any combination thereof associated with various information channels (e.g., control channels, data channels, information channels related to dynamic power aggregation). Information may be passed on to other components of the device 905. The receiver 910 may utilize a single antenna or a set of multiple antennas.

The transmitter 915 may provide a means for transmitting signals generated by other components of the device 905. For example, the transmitter 915 may transmit information such as packets, user data, control information, or any combination thereof associated with various information channels (e.g., control channels, data channels, information channels related to dynamic power aggregation). In some examples, the transmitter 915 may be co-located with a receiver 910 in a transceiver module. The transmitter 915 may utilize a single antenna or a set of multiple antennas.

The communications manager 920, the receiver 910, the transmitter 915, or various combinations thereof or various components thereof may be examples of means for performing various aspects of dynamic power aggregation as described herein. For example, the communications manager 920, the receiver 910, the transmitter 915, or various combinations or components thereof may support a method for performing one or more of the functions described herein.

In some examples, the communications manager 920, the receiver 910, the transmitter 915, or various combinations or components thereof may be implemented in hardware (e.g., in communications management circuitry). The hardware may include a processor, a DSP, an ASIC, an FPGA or other programmable logic device, a discrete gate or transistor logic, discrete hardware components, or any combination thereof configured as or otherwise supporting a means for performing the functions described in the present disclosure. In some examples, a processor and memory coupled with the processor may be configured to perform one or more of the functions described herein (e.g., by executing, by the processor, instructions stored in the memory).

Additionally or alternatively, in some examples, the communications manager 920, the receiver 910, the transmitter 915, or various combinations or components thereof may be implemented in code (e.g., as communications management software or firmware) executed by a processor. If implemented in code executed by a processor, the functions of the communications manager 920, the receiver 910, the transmitter 915, or various combinations or components thereof may be performed by a general-purpose processor, a DSP, a CPU, an ASIC, an FPGA, or any combination of these or other programmable logic devices (e.g., configured as or otherwise supporting a means for performing the functions described in the present disclosure).

In some examples, the communications manager 920 may be configured to perform various operations (e.g., receiving, monitoring, transmitting) using or otherwise in cooperation with the receiver 910, the transmitter 915, or both. For example, the communications manager 920 may receive information from the receiver 910, send information to the transmitter 915, or be integrated in combination with the receiver 910, the transmitter 915, or both to receive information, transmit information, or perform various other operations as described herein.

The communications manager 920 may support wireless communications at a base station in accordance with examples as disclosed herein. For example, the communications manager 920 may be configured as or otherwise support a means for transmitting, to a UE, control signaling that schedules transmission of one or more uplink messages from the UE. The communications manager 920 may be configured as or otherwise support a means for transmitting, to the UE, one or more power aggregation parameters pertaining to UE control of instantaneous transmit power within a time interval during which average maximum transmit power is limited. The communications manager 920 may be configured as or otherwise support a means for monitoring for the one or more uplink messages in accordance with the one or more power aggregation parameters and the control signaling.

By including or configuring the communications manager 920 in accordance with examples as described herein, the device 905 (e.g., a processor controlling or otherwise coupled to the receiver 910, the transmitter 915, the communications manager 920, or a combination thereof) may support techniques for reduced processing, reduced power consumption, longer battery life, more efficient utilization of communication resources, and improved reliability of uplink transmissions.

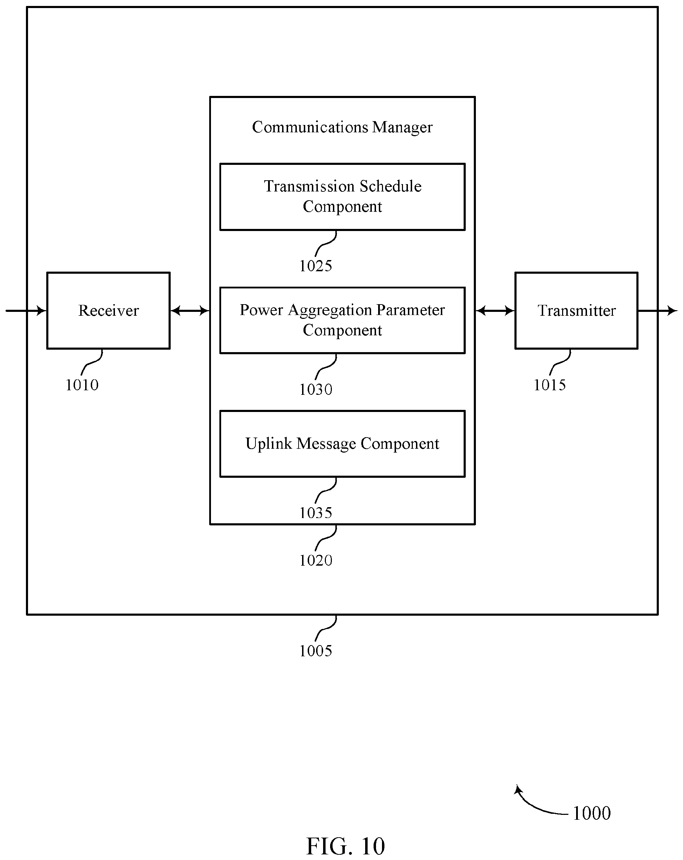

**FIG. 10** shows a block diagram 1000 of a device 1005 that supports dynamic power aggregation in accordance with aspects of the present disclosure. The device 1005 may be an example of aspects of a device 905 or a base station 105 as described herein. The device 1005 may include a receiver 1010, a transmitter 1015, and a communications manager 1020. The device 1005 may also include a processor. Each of these components may be in communication with one another (e.g., via one or more buses).

The receiver 1010 may provide a means for receiving information such as packets, user data, control information, or any combination thereof associated with various information channels (e.g., control channels, data channels, information channels related to dynamic power aggregation). Information may be passed on to other components of the device 1005. The receiver 1010 may utilize a single antenna or a set of multiple antennas.

The transmitter 1015 may provide a means for transmitting signals generated by other components of the device 1005. For example, the transmitter 1015 may transmit information such as packets, user data, control information, or any combination thereof associated with various information channels (e.g., control channels, data channels, information channels related to dynamic power aggregation). In some examples, the transmitter 1015 may be co-located with a receiver 1010 in a transceiver module. The transmitter 1015 may utilize a single antenna or a set of multiple antennas.

The device 1005, or various components thereof, may be an example of means for performing various aspects of dynamic power aggregation as described herein. For example, the communications manager 1020 may include a transmission schedule component 1025, a power aggregation parameter component 1030, an uplink message component 1035, or any combination thereof. The communications manager 1020 may be an example of aspects of a communications manager 920 as described herein. In some examples, the communications manager 1020, or various components thereof, may be configured to perform various operations (e.g., receiving, monitoring, transmitting) using or otherwise in cooperation with the receiver 1010, the transmitter 1015, or both. For example, the communications manager 1020 may receive information from the receiver 1010, send information to the transmitter 1015, or be integrated in combination with the receiver 1010, the transmitter 1015, or both to receive information, transmit information, or perform various other operations as described herein.

The communications manager 1020 may support wireless communications at a base station in accordance with examples as disclosed herein. The transmission schedule component 1025 may be configured as or otherwise support a means for transmitting, to a UE, control signaling that schedules transmission of one or more uplink messages from the UE. The power aggregation parameter component 1030 may be configured as or otherwise support a means for transmitting, to the UE, one or more power aggregation parameters pertaining to UE control of instantaneous transmit power within a time interval during which average maximum transmit power is limited. The uplink message component 1035 may be configured as or otherwise support a means for monitoring for the one or more uplink messages in accordance with the one or more power aggregation parameters and the control signaling.

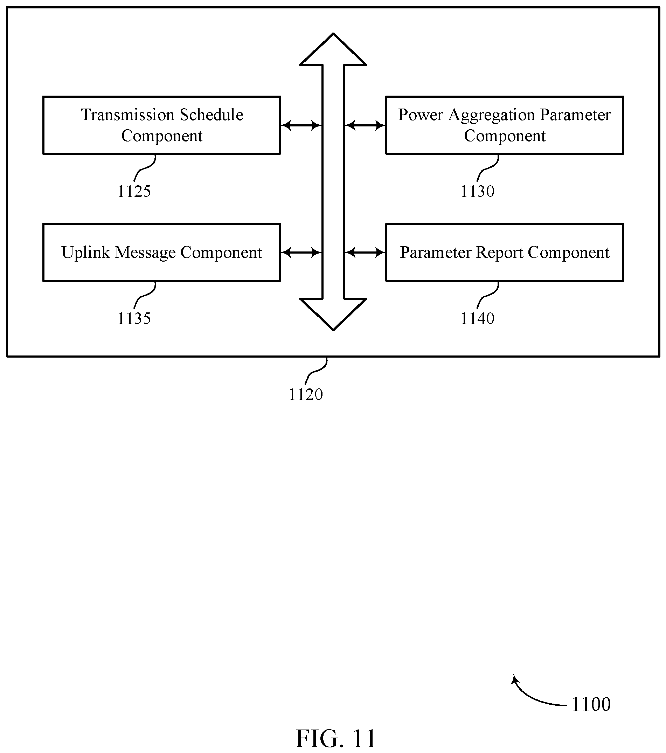

**FIG. 11** shows a block diagram 1100 of a communications manager 1120 that supports dynamic power aggregation in accordance with aspects of the present disclosure. The communications manager 1120 may be an example of aspects of a communications manager 920, a communications manager 1020, or both, as described herein. The communications manager 1120, or various components thereof, may be an example of means for performing various aspects of dynamic power aggregation as described herein. For example, the communications manager 1120 may include a transmission schedule component 1125, a power aggregation parameter component 1130, an uplink message component 1135, a parameter report component 1140, or any combination thereof. Each of these components may communicate, directly or indirectly, with one another (e.g., via one or more buses).

The communications manager 1120 may support wireless communications at a base station in accordance with examples as disclosed herein. The transmission schedule component 1125 may be configured as or otherwise support a means for transmitting, to a UE, control signaling that schedules transmission of one or more uplink messages from the UE. The power aggregation parameter component 1130 may be configured as or otherwise support a means for transmitting, to the UE, one or more power aggregation parameters pertaining to UE control of instantaneous transmit power within a time interval during which average maximum transmit power is limited. The uplink message component 1135 may be configured as or otherwise support a means for monitoring for the one or more uplink messages in accordance with the one or more power aggregation parameters and the control signaling.

In some examples, to support transmitting the one or more power aggregation parameters, the power aggregation parameter component 1130 may be configured as or otherwise support a means for transmitting an indication of at least one of a size of the time interval or an average maximum transmit power limit for the time interval.

In some examples, to support transmitting the one or more power aggregation parameters, the power aggregation parameter component 1130 may be configured as or otherwise support a means for transmitting an indication of a minimum guaranteed maximum transmit power for transmissions below the average maximum transmit power limit.

According to the invention, to support transmitting the one or more power aggregation parameters, the power aggregation parameter component 1130 is configured as or otherwise support a means for transmitting an indication of a maximum duration during which the instantaneous transmit power is allowed to exceed an average maximum transmit power limit.

In some examples, to support transmitting the one or more power aggregation parameters, the power aggregation parameter component 1130 may be configured as or otherwise support a means for transmitting an indication of a power scaling strategy to be used by the UE in applying the power aggregation configuration across multiple carriers or frequency bands.

In some examples, to support transmitting the indication of the power scaling strategy, the power aggregation parameter component 1130 may be configured as or otherwise support a means for transmitting an indication that the power scaling strategy is a strategy for scaling down the instantaneous transmit power equally across the multiple carriers or frequency bands, in accordance with a weighted scaling across the multiple carriers or frequency bands, or in accordance with a predefined order across the multiple carriers or frequency bands.

In some examples, the parameter report component 1140 may be configured as or otherwise support a means for receiving, from the UE, a report that includes one or more reported parameters that are based on an average transmit power.

In some examples, to support receiving the report, the parameter report component 1140 may be configured as or otherwise support a means for receiving the one or more reported parameters that are indicative of at least one of the average transmit power, a headroom parameter associated with a difference between the average transmit power and an average maximum transmit power limit, or a history of the instantaneous transmit power.

In some examples, the one or more reported parameters that are indicative of the history of the instantaneous transmit power includes a first statistical parameter associated with the instantaneous transmit power over time, a second statistical parameter associated with uplink data transmission activity over time, or a combination thereof.

In some examples, to support receiving the report, the parameter report component 1140 may be configured as or otherwise support a means for receiving the report via radio resource control signaling, a medium access control (MAC) control element (CE), an uplink control information message, or any combination thereof.

In some examples, the report is associated with a cell, a frequency band, a cell group, or any combination thereof.

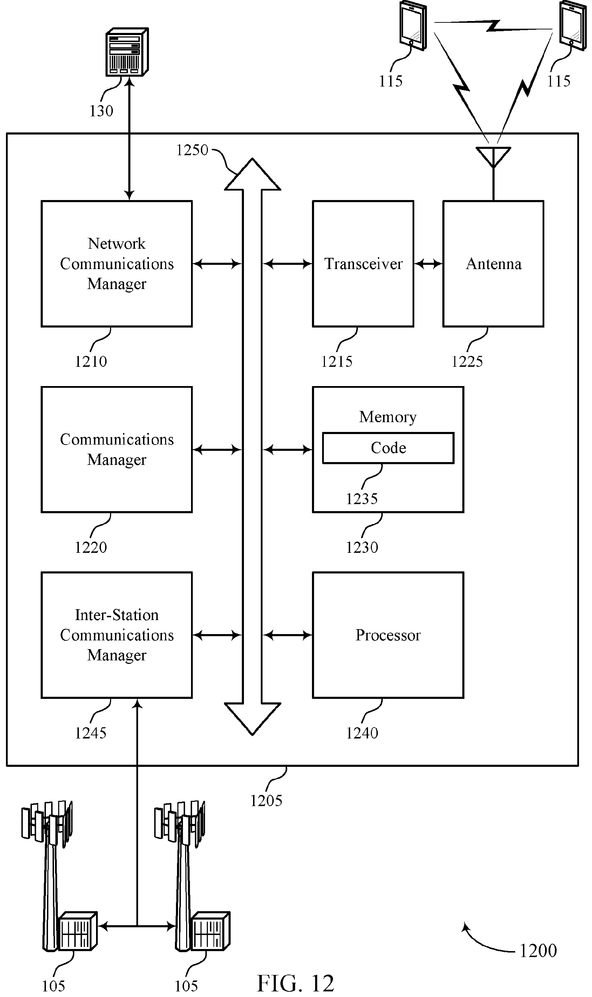

**FIG. 12** shows a diagram of a system 1200 including a device 1205 that supports dynamic power aggregation in accordance with aspects of the present disclosure. The device 1205 may be an example of or include the components of a device 905, a device 1005, or a base station 105 as described herein. The device 1205 may communicate wirelessly with one or more base stations 105, UEs 115, or any combination thereof. The device 1205 may include components for bi-directional voice and data communications including components for transmitting and receiving communications, such as a communications manager 1220, a network communications manager 1210, a transceiver 1215, an antenna 1225, a memory 1230, code 1235, a processor 1240, and an inter-station communications manager 1245. These components may be in electronic communication or otherwise coupled (e.g., operatively, communicatively, functionally, electronically, electrically) via one or more buses (e.g., a bus 1250).

The network communications manager 1210 may manage communications with a core network 130 (e.g., via one or more wired backhaul links). For example, the network communications manager 1210 may manage the transfer of data communications for client devices, such as one or more UEs 115.

In some cases, the device 1205 may include a single antenna 1225. However, in some other cases the device 1205 may have more than one antenna 1225, which may be capable of concurrently transmitting or receiving multiple wireless transmissions. The transceiver 1215 may communicate bi-directionally, via the one or more antennas 1225, wired, or wireless links as described herein. For example, the transceiver 1215 may represent a wireless transceiver and may communicate bi-directionally with another wireless transceiver. The transceiver 1215 may also include a modem to modulate the packets, to provide the modulated packets to one or more antennas 1225 for transmission, and to demodulate packets received from the one or more antennas 1225. The transceiver 1215, or the transceiver 1215 and one or more antennas 1225, may be an example of a transmitter 915, a transmitter 1015, a receiver 910, a receiver 1010, or any combination thereof or component thereof, as described herein.

The memory 1230 may include RAM and ROM. The memory 1230 may store computer-readable, computer-executable code 1235 including instructions that, when executed by the processor 1240, cause the device 1205 to perform various functions described herein. The code 1235 may be stored in a non-transitory computer-readable medium such as system memory or another type of memory. In some cases, the code 1235 may not be directly executable by the processor 1240 but may cause a computer (e.g., when compiled and executed) to perform functions described herein. In some cases, the memory 1230 may contain, among other things, a BIOS which may control basic hardware or software operation such as the interaction with peripheral components or devices.

The processor 1240 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 1240 may be configured to operate a memory array using a memory controller. In some other cases, a memory controller may be integrated into the processor 1240. The processor 1240 may be configured to execute computer-readable instructions stored in a memory (e.g., the memory 1230) to cause the device 1205 to perform various functions (e.g., functions or tasks supporting dynamic power aggregation). For example, the device 1205 or a component of the device 1205 may include a processor 1240 and memory 1230 coupled to the processor 1240, the processor 1240 and memory 1230 configured to perform various functions described herein.

The inter-station communications manager 1245 may manage communications with other base stations 105, and may include a controller or scheduler for controlling communications with UEs 115 in cooperation with other base stations 105. For example, the inter-station communications manager 1245 may coordinate scheduling for transmissions to UEs 115 for various interference mitigation techniques such as beamforming or joint transmission. In some examples, the inter-station communications manager 1245 may provide an X2 interface within an LTE/LTE-A wireless communications network technology to provide communication between base stations 105.

The communications manager 1220 may support wireless communications at a base station in accordance with examples as disclosed herein. For example, the communications manager 1220 may be configured as or otherwise support a means for transmitting, to a UE, control signaling that schedules transmission of one or more uplink messages from the UE. The communications manager 1220 may be configured as or otherwise support a means for transmitting, to the UE, one or more power aggregation parameters pertaining to UE control of instantaneous transmit power within a time interval during which average maximum transmit power is limited. The communications manager 1220 may be configured as or otherwise support a means for monitoring for the one or more uplink messages in accordance with the one or more power aggregation parameters and the control signaling.

By including or configuring the communications manager 1220 in accordance with examples as described herein, the device 1205 may support techniques for reduced processing, reduced power consumption, more efficient utilization of communication resources, and improved reliability of uplink transmissions.

In some examples, the communications manager 1220 may be configured to perform various operations (e.g., receiving, monitoring, transmitting) using or otherwise in cooperation with the transceiver 1215, the one or more antennas 1225, or any combination thereof. Although the communications manager 1220 is illustrated as a separate component, in some examples, one or more functions described with reference to the communications manager 1220 may be supported by or performed by the processor 1240, the memory 1230, the code 1235, or any combination thereof. For example, the code 1235 may include instructions executable by the processor 1240 to cause the device 1205 to perform various aspects of dynamic power aggregation as described herein, or the processor 1240 and the memory 1230 may be otherwise configured to perform or support such operations.

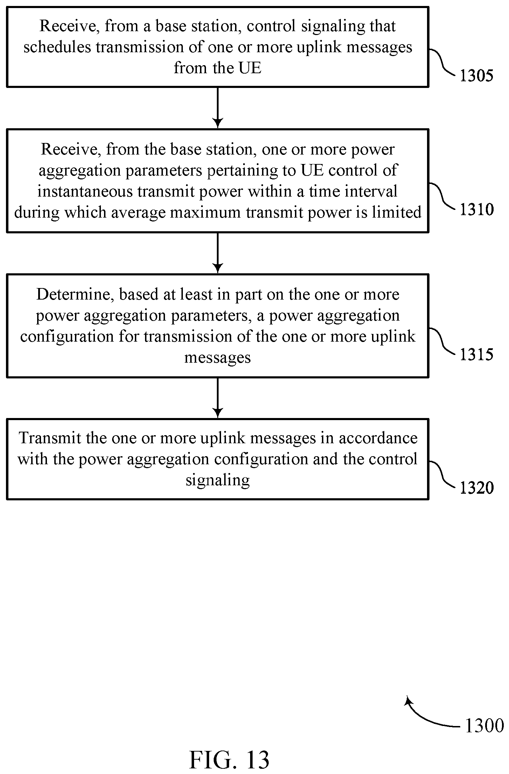

**FIG. 13** shows a flowchart illustrating a method 1300 that supports dynamic power aggregation in accordance with aspects of the present disclosure. The operations of the method 1300 may be implemented by a UE or its components as described herein. For example, the operations of the method 1300 may be performed by a UE 115 as described with reference to FIGs. 1 through 8. In some examples, a UE may execute a set of instructions to control the functional elements of the UE to perform the described functions. Additionally or alternatively, the UE may perform aspects of the described functions using special-purpose hardware.

At 1305, the method may include receiving, from a base station, control signaling that schedules transmission of one or more uplink messages from the UE. The operations of 1305 may be performed in accordance with examples as disclosed herein. In some examples, aspects of the operations of 1305 may be performed by a transmission schedule manager 725 as described with reference to FIG. 7.

At 1310, the method may include receiving, from the base station, one or more power aggregation parameters pertaining to UE control of instantaneous transmit power within a time interval during which average maximum transmit power is limited. The operations of 1310 may be performed in accordance with examples as disclosed herein. In some examples, aspects of the operations of 1310 may be performed by a power aggregation parameter manager 730 as described with reference to FIG. 7.

At 1315, the method may include determining, based on the one or more power aggregation parameters, a power aggregation configuration for transmission of the one or more uplink messages. The operations of 1315 may be performed in accordance with examples as disclosed herein. In some examples, aspects of the operations of 1315 may be performed by a power aggregation configuration manager 735 as described with reference to FIG. 7.

At 1320, the method may include transmitting the one or more uplink messages in accordance with the power aggregation configuration and the control signaling. The operations of 1320 may be performed in accordance with examples as disclosed herein. In some examples, aspects of the operations of 1320 may be performed by an uplink message manager 740 as described with reference to FIG. 7.

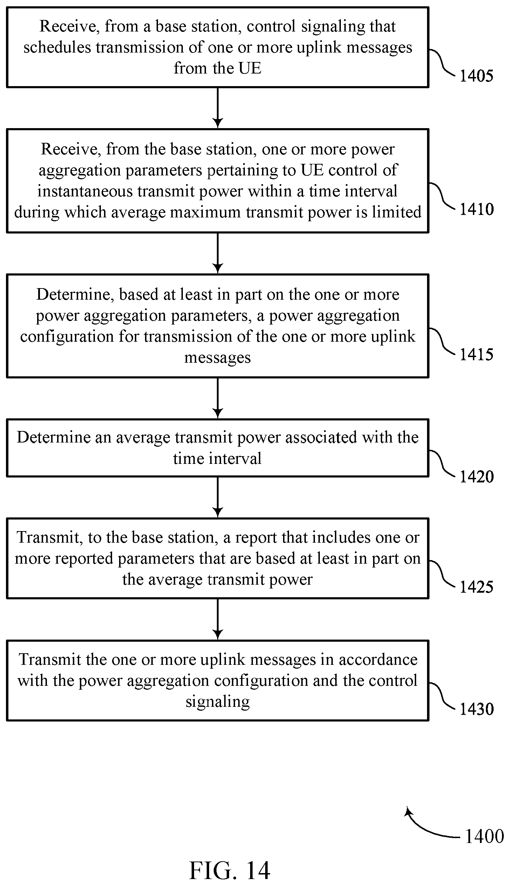

**FIG. 14** shows a flowchart illustrating a method 1400 that supports dynamic power aggregation in accordance with aspects of the present disclosure. The operations of the method 1400 may be implemented by a UE or its components as described herein. For example, the operations of the method 1400 may be performed by a UE 115 as described with reference to FIGs. 1 through 8. In some examples, a UE may execute a set of instructions to control the functional elements of the UE to perform the described functions. Additionally or alternatively, the UE may perform aspects of the described functions using special-purpose hardware.

At 1405, the method may include receiving, from a base station, control signaling that schedules transmission of one or more uplink messages from the UE. The operations of 1405 may be performed in accordance with examples as disclosed herein. In some examples, aspects of the operations of 1405 may be performed by a transmission schedule manager 725 as described with reference to FIG. 7.

At 1410, the method may include receiving, from the base station, one or more power aggregation parameters pertaining to UE control of instantaneous transmit power within a time interval during which average maximum transmit power is limited. The operations of 1410 may be performed in accordance with examples as disclosed herein. In some examples, aspects of the operations of 1410 may be performed by a power aggregation parameter manager 730 as described with reference to FIG. 7.

At 1415, the method may include determining, based on the one or more power aggregation parameters, a power aggregation configuration for transmission of the one or more uplink messages. The operations of 1415 may be performed in accordance with examples as disclosed herein. In some examples, aspects of the operations of 1415 may be performed by a power aggregation configuration manager 735 as described with reference to FIG. 7.

At 1420, the method may include determining an average transmit power associated with the time interval. The operations of 1420 may be performed in accordance with examples as disclosed herein. In some examples, aspects of the operations of 1420 may be performed by an average power determination manager 745 as described with reference to FIG. 7.

At 1425, the method may include transmitting, to the base station, a report that includes one or more reported parameters that are based on the average transmit power. The operations of 1425 may be performed in accordance with examples as disclosed herein. In some examples, aspects of the operations of 1425 may be performed by a parameter report manager 750 as described with reference to FIG. 7.

At 1430, the method may include transmitting the one or more uplink messages in accordance with the power aggregation configuration and the control signaling. The operations of 1430 may be performed in accordance with examples as disclosed herein. In some examples, aspects of the operations of 1430 may be performed by an uplink message manager 740 as described with reference to FIG. 7.

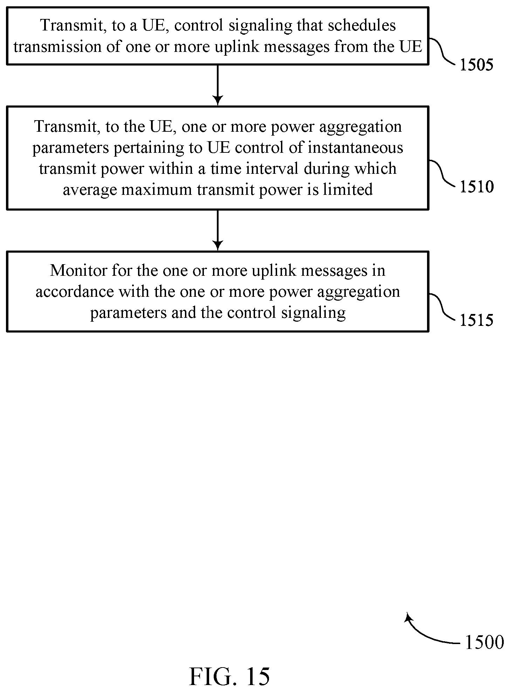

**FIG. 15** shows a flowchart illustrating a method 1500 that supports dynamic power aggregation in accordance with aspects of the present disclosure. The operations of the method 1500 may be implemented by a base station or its components as described herein. For example, the operations of the method 1500 may be performed by a base station 105 as described with reference to FIGs. 1 through 4 and 9 through 12. In some examples, a base station may execute a set of instructions to control the functional elements of the base station to perform the described functions. Additionally or alternatively, the base station may perform aspects of the described functions using special-purpose hardware.

At 1505, the method may include transmitting, to a UE, control signaling that schedules transmission of one or more uplink messages from the UE. The operations of 1505 may be performed in accordance with examples as disclosed herein. In some examples, aspects of the operations of 1505 may be performed by a transmission schedule component 1125 as described with reference to FIG. 11.

At 1510, the method may include transmitting, to the UE, one or more power aggregation parameters pertaining to UE control of instantaneous transmit power within a time interval during which average maximum transmit power is limited. The operations of 1510 may be performed in accordance with examples as disclosed herein. In some examples, aspects of the operations of 1510 may be performed by a power aggregation parameter component 1130 as described with reference to FIG. 11.

At 1515, the method may include monitoring for the one or more uplink messages in accordance with the one or more power aggregation parameters and the control signaling. The operations of 1515 may be performed in accordance with examples as disclosed herein. In some examples, aspects of the operations of 1515 may be performed by an uplink message component 1135 as described with reference to FIG. 11.

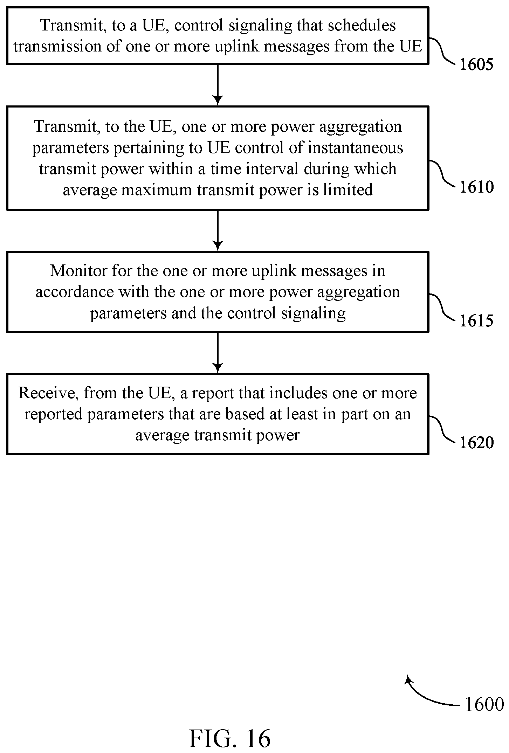

**FIG. 16** shows a flowchart illustrating a method 1600 that supports dynamic power aggregation in accordance with aspects of the present disclosure. The operations of the method 1600 may be implemented by a base station or its components as described herein. For example, the operations of the method 1600 may be performed by a base station 105 as described with reference to FIGs. 1 through 4 and 9 through 12. In some examples, a base station may execute a set of instructions to control the functional elements of the base station to perform the described functions. Additionally or alternatively, the base station may perform aspects of the described functions using special-purpose hardware.

At 1605, the method may include transmitting, to a UE, control signaling that schedules transmission of one or more uplink messages from the UE. The operations of 1605 may be performed in accordance with examples as disclosed herein. In some examples, aspects of the operations of 1605 may be performed by a transmission schedule component 1125 as described with reference to FIG. 11.

At 1610, the method may include transmitting, to the UE, one or more power aggregation parameters pertaining to UE control of instantaneous transmit power within a time interval during which average maximum transmit power is limited. The operations of 1610 may be performed in accordance with examples as disclosed herein. In some examples, aspects of the operations of 1610 may be performed by a power aggregation parameter component 1130 as described with reference to FIG. 11.

At 1615, the method may include monitoring for the one or more uplink messages in accordance with the one or more power aggregation parameters and the control signaling. The operations of 1615 may be performed in accordance with examples as disclosed herein. In some examples, aspects of the operations of 1615 may be performed by an uplink message component 1135 as described with reference to FIG. 11.

At 1620, the method may include receiving, from the UE, a report that includes one or more reported parameters that are based on an average transmit power. The operations of 1620 may be performed in accordance with examples as disclosed herein. In some examples, aspects of the operations of 1620 may be performed by a parameter report component 1140 as described with reference to FIG. 11.

It should be noted that the methods described herein describe possible implementations, and that the operations and the steps may be rearranged or otherwise modified and that other implementations are possible. Further, aspects from two or more of the methods may be combined.

Although aspects of an LTE, LTE-A, LTE-A Pro, or NR system may be described for purposes of example, and LTE, LTE-A, LTE-A Pro, or NR terminology may be used in much of the description, the techniques described herein are applicable beyond LTE, LTE-A, LTE-A Pro, or NR networks. For example, the described techniques may be applicable to various other wireless communications systems such as Ultra Mobile Broadband (UMB), Institute of Electrical and Electronics Engineers (IEEE) 802.11 (Wi-Fi), IEEE 802.16 (WiMAX), IEEE 802.20, Flash-OFDM, as well as other systems and radio technologies not explicitly mentioned herein.

Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The various illustrative blocks and components described in connection with the disclosure herein may be implemented or performed with a general-purpose processor, a DSP, an ASIC, a CPU, an FPGA or other programmable logic device, discrete gate or transistor logic, discrete hardware components, or any combination thereof designed to perform the functions described herein. A general-purpose processor may be a microprocessor, but in the alternative, the processor may be any processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described herein may be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that may be accessed by a general-purpose or special-purpose computer. By way of example, and not limitation, non-transitory computer-readable media may include RAM, ROM, electrically erasable programmable ROM (EEPROM), flash memory, compact disk (CD) ROM or other optical disk storage, magnetic disk storage or other magnetic storage devices, or any other non-transitory medium that may be used to carry or store desired program code means in the form of instructions or data structures and that may be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of computer-readable medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (e.g., a list of items prefaced by a phrase such as "at least one of" or "one or more of") indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an example step that is described as "based on condition A" may be based on both a condition A and a condition B without departing from the scope of the present disclosure. In other words, as used herein, the phrase "based on" shall be construed in the same manner as the phrase "based at least in part on."

The term "determine" or "determining" encompasses a wide variety of actions and, therefore, "determining" can include calculating, computing, processing, deriving, investigating, looking up (such as via looking up in a table, a database or another data structure), ascertaining and the like. Also, "determining" can include receiving (such as receiving information), accessing (such as accessing data in a memory) and the like. Also, "determining" can include resolving, selecting, choosing, establishing and other such similar actions.

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label, or other subsequent reference label.

The description set forth herein, in connection with the appended drawings, describes example configurations and does not represent all the examples that may be implemented or that are within the scope of the claims. The term "example" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, known structures and devices are shown in block diagram form in order to avoid obscuring the concepts of the described examples.

The description herein is provided to enable a person having ordinary skill in the art to make or use the disclosure. Various modifications to the disclosure will be apparent to a person having ordinary skill in the art, and the generic principles defined herein may be applied to other variations without departing from the scope of the disclosure. Thus, the disclosure is not limited to the examples and designs described herein but is to be accorded the broadest scope consistent with the principles and novel features disclosed herein.

## Claims

1. A method for wireless communications at a user equipment, UE, comprising:
receiving (1305), from a base station, control signaling that schedules transmission of one or more uplink messages from the UE;
receiving (1310), from the base station, one or more power aggregation parameters pertaining to UE control of instantaneous transmit power within a time interval during which average maximum transmit power is limited, wherein the one or more power aggregation parameters comprises an indication of at least one of a maximum duration during which the instantaneous transmit power is allowed to exceed an average maximum transmit power limit;
determining (1315), based at least in part on the one or more power aggregation parameters, a power aggregation configuration for transmission of the one or more uplink messages; and
transmitting (1320) the one or more uplink messages in accordance with the power aggregation configuration and the control signaling.

2. The method of claim 1, wherein receiving the one or more power aggregation parameters further comprises:
receiving an indication of at least one of a size of the time interval or an average maximum transmit power limit for the time interval, or wherein receiving the one or more power aggregation parameters further comprises receiving a minimum guaranteed maximum transmit power for transmissions below the average maximum transmit power limit, or wherein receiving the one or more power aggregation parameters further comprises:
receiving an indication of a power scaling strategy to be used by the UE in applying the power aggregation configuration across multiple carriers or frequency bands.

3. The method of claim 2, wherein receiving the indication of the power scaling strategy further comprises:
receiving an indication that the power scaling strategy is a strategy for scaling down the instantaneous transmit power equally across the multiple carriers or frequency bands, in accordance with a weighted scaling across the multiple carriers or frequency bands, or in accordance with a predefined order across the multiple carriers or frequency bands.

4. The method of claim 1, further comprising:
determining an average transmit power associated with the time interval; and
transmitting, to the base station, a report that includes one or more reported parameters that are based at least in part on the average transmit power.

5. The method of claim 4, wherein transmitting the report further comprises:
transmitting the one or more reported parameters that are indicative of at least one of the average transmit power, a headroom parameter associated with a difference between the average transmit power and an average maximum transmit power limit, or a history of the instantaneous transmit power.

6. The method of claim 5, wherein the one or more reported parameters that are indicative of the history of the instantaneous transmit power includes a first statistical parameter associated with the instantaneous transmit power over time, a second statistical parameter associated with uplink data transmission activity over time, or a combination thereof.

7. The method of claim 4, wherein transmitting the report further comprises:
transmitting the report via radio resource control signaling, a medium access control, MAC, control element, CE, an uplink control information message, or any combination thereof, or wherein the report is associated with a cell, a frequency band, a cell group, or any combination thereof.

8. The method of claim 1, further comprising:
receiving, from the base station, an indication of a requested transmit power for each of the one or more uplink messages across multiple carriers, wherein a total transmit power indicated across all of the multiple carriers exceeds the instantaneous transmit power;
determining a power scaling configuration for transmission of the one or more uplink messages such that a total transmit power applied across all of the multiple carriers is equal to or less than the instantaneous transmit power.

9. The method of claim 8, wherein the power scaling configuration comprises a first power scaling parameter associated with a first carrier or band of a carrier aggregation configuration at the UE and a second power scaling parameter associated with a second carrier or band of the carrier aggregation configuration at the UE, or wherein the power scaling configuration is determined based at least in part on a total configured maximum output power for a transmission occasion associated with transmission of the one or more uplink messages.

10. A method for wireless communications at a base station, comprising:
transmitting (1505), to a user equipment, UE, control signaling that schedules transmission of one or more uplink messages from the UE;
transmitting (1510), to the UE, one or more power aggregation parameters pertaining to UE control of instantaneous transmit power within a time interval during which average maximum transmit power is limited wherein the one or more power aggregation parameters comprises an indication of at least one of a maximum duration during which the instantaneous transmit power is allowed to exceed an average maximum transmit power limit; and
monitoring (1515) for the one or more uplink messages in accordance with the one or more power aggregation parameters and the control signaling.

11. The method of claim 10, wherein transmitting the one or more power aggregation parameters further comprises:
transmitting an indication of at least one of a size of the time interval or an average maximum transmit power limit for the time interval, or wherein transmitting the one or more power aggregation parameters further comprises:
transmitting an indication of at least one of a maximum duration during which the instantaneous transmit power is allowed to exceed an average maximum transmit power limit or a minimum guaranteed maximum transmit power for transmissions below the average maximum transmit power limit, or wherein transmitting the one or more power aggregation parameters further comprises:
transmitting an indication of a power scaling strategy to be used by the UE in applying the power aggregation configuration across multiple carriers or frequency bands, or further comprising:
receiving, from the UE, a report that includes one or more reported parameters that are based at least in part on an average transmit power.

12. The method of claim 11, wherein receiving the report further comprises:
receiving the one or more reported parameters that are indicative of at least one of the average transmit power, a headroom parameter associated with a difference between the average transmit power and an average maximum transmit power limit, or a history of the instantaneous transmit power.

13. The method of claim 12, wherein the one or more reported parameters that are indicative of the history of the instantaneous transmit power includes a first statistical parameter associated with the instantaneous transmit power over time, a second statistical parameter associated with uplink data transmission activity over time, or a combination thereof.

14. The method of claim 11, wherein receiving the report further comprises:
receiving the report via radio resource control signaling, a medium access control, MAC, control element, CE, an uplink control information message, or any combination thereof, or wherein the report is associated with a cell, a frequency band, a cell group, or any combination thereof.

15. A communication apparatus comprising:
a processor;
memory coupled with the processor; and
instructions stored in the memory and executable by the processor to cause the apparatus to perform the steps of any one of claims 1 to 9 or 10 to 14.

## Patentansprüche

1. Ein Verfahren für drahtlose Kommunikationen an einem Benutzergerät (User Equipment bzw. UE), aufweisend:
Empfangen (1305), von einer Basisstation, einer Steuersignalisierung, die das Senden einer oder mehrerer Uplink-Nachrichten von dem UE plant bzw. einteilt,
Empfangen (1310), von der Basisstation, eines oder mehrerer Leistungsaggregationsparameter in Bezug auf eine UE-Steuerung einer augenblicklichen Sendeleistung innerhalb eines Zeitintervalls, während dem eine durchschnittliche maximale Sendeleistung begrenzt ist, wobei der eine oder die mehreren Leistungsaggregationsparameter eine Angabe wenigstens einer maximalen Dauer, während der die augenblickliche Sendeleistung eine durchschnittliche maximale Sendeleistungsobergrenze überschreiten darf, aufweisen,
Bestimmen (1315), basierend wenigstens teilweise auf dem einen oder den mehreren Leistungsaggregationsparametern, einer Leistungsaggregationskonfiguration für das Senden der einen oder der mehreren Uplink-Nachrichten, und
Senden (1320) der einen oder der mehreren Uplink-Nachrichten gemäß der Leistungsaggregationskonfiguration und der Steuersignalisierung.

2. Verfahren nach Anspruch 1, wobei das Empfangen des einen oder der mehreren Leistungsaggregationsparameter weiterhin aufweist:
Empfangen einer Angabe einer Größe des Zeitintervalls und/oder einer durchschnittlichen maximalen Sendeleistungsobergrenze für das Zeitintervall, oder wobei das Empfangen des einen oder der mehreren Leistungsaggregationsparameter weiterhin das Empfangen einer minimalen garantierten maximalen Sendeleistung für Sendungen unter der durchschnittlichen maximalen Sendeleistungsobergrenze aufweist, oder wobei das Empfangen des einen oder der mehreren Leistungsaggregationsparameter weiterhin aufweist:
Empfangen einer Angabe einer Leistungsskalierungsstrategie, die durch das UE beim Anwenden der Leistungsaggregationskonfiguration über mehrere Träger oder Frequenzbänder zu verwenden ist.

3. Verfahren nach Anspruch 2, wobei das Empfangen der Angabe der Leistungsskalierungsstrategie weiterhin aufweist:
Empfangen einer Angabe, dass die Leistungsskalierungsstrategie eine Strategie für ein Abwärtsskalieren der augenblicklichen Sendeleistung gleichmäßig über die mehreren Träger oder Frequenzbänder, gemäß einer gewichteten Skalierung über die mehreren Träger oder Frequenzbänder oder gemäß einer vordefinierten Ordnung bzw. Reihenfolge über die mehreren Träger oder Frequenzbänder ist.

4. Verfahren nach Anspruch 1, das weiterhin aufweist:
Bestimmen einer durchschnittlichen Sendeleistung, die mit dem Zeitintervall assoziiert ist, und
Senden, an die Basisstation, eines Berichts, der einen oder mehrere berichtete Parameter, die wenigstens teilweise auf der durchschnittlichen Sendeleistung basieren, enthält.

5. Verfahren nach Anspruch 4, wobei das Senden des Berichts weiterhin aufweist:
Senden des einen oder der mehreren berichteten Parameter, die die durchschnittliche Sendeleistung, einen mit einer Differenz zwischen der durchschnittlichen Sendeleistung und einer durchschnittlichen maximalen Sendeleistungsobergrenze assoziierten Reserverparameter und/oder einen Verlauf der augenblicklichen Sendeleistung angeben.

6. Verfahren nach Anspruch 5, wobei der eine oder die mehreren berichteten Parameter, die den Verlauf der augenblicklichen Sendeleistung angeben, einen ersten statistischen Parameter, der mit der augenblicklichen Sendeleistung über die Zeit assoziiert ist, einen zweiten statistischen Parameter, der mit einer Uplink-Daten-Sendeaktivität über die Zeit assoziiert ist, oder eine Kombination aus diesen umfassen.

7. Verfahren nach Anspruch 4, wobei das Senden des Berichts weiterhin aufweist:
Senden des Berichts über eine Funkressourcensteuerung-Signalisierung, ein MAC (Medium Access Control)-Steuerelement (Control Element bzw. CE), eine Uplink-Steuerinformationen-Nachricht oder eine beliebige Kombination aus diesen, oder wobei der Bericht mit einer Zelle, einem Frequenzband, einer Zellengruppe oder einer beliebigen Kombination aus diesen assoziiert ist.

8. Verfahren nach Anspruch 1, das weiterhin aufweist:
Empfangen, von der Basisstation, einer Angabe einer angefragten Sendeleistung für jede der einen oder der mehreren Uplink-Nachrichten über mehrere Träger, wobei eine über alle der mehreren Träger angegebene Gesamtsendeleistung die augenblickliche Sendeleistung überschreitet,
Bestimmen einer Leistungsskalierungskonfiguration für das Senden der einen oder der mehreren Uplink-Nachrichten derart, dass eine über alle der mehreren Träger angewendete Gesamtsendeleistung gleich oder kleiner als die augenblickliche Sendeleistung ist.

9. Verfahren nach Anspruch 8, wobei die Leistungsskalierungskonfiguration einen ersten Leistungsskalierungsparameter, der mit einem ersten Träger oder Band einer Trägeraggregationskonfiguration an dem UE assoziiert ist, und einen zweiten Leistungsskalierungsparameter, der mit einem zweiten Träger oder Band der Trägeraggregationskonfiguration an dem UE assoziiert ist, aufweist oder wobei die Leistungsskalierungskonfiguration basierend wenigstens teilweise auf einer gesamten konfigurierten maximalen Ausgabeleistung für eine Sendegelegenheit, die mit dem Senden der einen oder der mehreren Uplink-Nachrichten assoziiert ist, bestimmt wird.

10. Ein Verfahren für drahtlose Kommunikationen an einer Basisstation, aufweisend:
Senden (1505), an ein Benutzergerät (User Equipment bzw. UE), einer Steuersignalisierung, die das Senden einer oder mehrerer Uplink-Nachrichten von dem UE plant,
Senden (1510), an das UE, eines oder mehrerer Leistungsaggregationsparameter in Bezug auf eine UE-Steuerung einer augenblicklichen Sendeleistung innerhalb eines Zeitintervalls, während dem eine durchschnittliche maximale Sendeleistung begrenzt ist, wobei der eine oder die mehreren Leistungsaggregationsparameter eine Angabe wenigstens einer maximalen Dauer, während der die augenblickliche Sendeleistung eine durchschnittliche maximale Sendeleistungsobergrenze überschreiten darf, aufweisen, und
Überwachen (1515) auf die eine oder die mehreren Uplink-Nachrichten gemäß dem einen oder den mehreren Leistungsaggregationsparametern und der Steuersignalisierung.

11. Verfahren nach Anspruch 10, wobei das Senden des einen oder der mehreren Leistungsaggregationsparameter weiterhin aufweist:
Senden einer Angabe einer Größe des Zeitintervalls und/oder einer durchschnittlichen maximalen Sendeleistungsobergrenze für das Zeitintervall, oder wobei das Senden des einen oder der mehreren Leistungsaggregationsparameter weiterhin aufweist:
Senden einer Angabe einer maximalen Dauer, während welcher die augenblickliche Sendeleistung eine durchschnittliche maximale Sendeleistungsobergrenze überschreiten darf, und/oder einer minimalen garantierten Sendeleistung für Sendungen unter der durchschnittlichen maximalen Sendeleistungsobergrenze, oder wobei das Senden des einen oder der mehreren Leistungsaggregationsparameter weiterhin aufweist:
Senden einer Angabe einer Leistungsskalierungsstrategie, die durch das UE beim Anwenden der Leistungsaggregationskonfiguration über mehrere Träger oder Frequenzbänder zu verwenden ist,
oder weiterhin aufweist:
Empfangen, von dem UE, eines Berichts, der einen oder mehrere berichtete Parameter, die wenigstens teilweise auf einer durchschnittlichen Sendeleistung basieren, enthält.

12. Verfahren nach Anspruch 11, wobei das Empfangen des Berichts weiterhin aufweist:
Empfangen des einen oder der mehreren berichteten Parameter, die die durchschnittliche Sendeleistung, einen mit einer Differenz zwischen der durchschnittlichen Sendeleistung und einer durchschnittlichen maximalen Sendeleistungsobergrenze assoziierten Reserveparameter oder einen Verlauf der augenblicklichen Sendeleistung angeben.

13. Verfahren nach Anspruch 12, wobei der eine oder die mehreren berichteten Parameter, die den Verlauf der augenblicklichen Sendeleistung angeben, einen ersten statistischen Parameter, der mit der augenblicklichen Sendeleistung über die Zeit assoziiert ist, einen zweiten statistischen Parameter, der mit einer Uplink-Daten-Sendeaktivität über die Zeit assoziiert ist, oder eine Kombination aus diesen umfassen.

14. Verfahren nach Anspruch 11, wobei das Empfangen des Berichts weiterhin aufweist:
Empfangen des Berichts über eine Funkressourcensteuerung-Signalisierung, ein MAC (Medium Access Control)-Steuerelement (Control Element bzw. CE), eine Uplink-Steuerinformationen-Nachricht oder eine beliebige Kombination aus diesen, oder wobei der Bericht mit einer Zelle, einem Frequenzband, einer Zellengruppe oder einer beliebigen Kombination aus diesen assoziiert ist.

15. Eine Kommunikationsvorrichtung, aufweisend:
einen Prozessor,
einen Speicher, der mit dem Prozessor gekoppelt ist, und
Befehle, die in dem Speicher gespeichert sind und durch den Prozessor ausgeführt werden können, um die Vorrichtung zum Durchführen der Schritte gemäß einem der Ansprüche 1 bis 9 oder 10 bis 14 zu veranlassen.

## Revendications

1. Procédé de communications sans fil au niveau d'un équipement utilisateur, UE, comprenant :
une réception (1305), en provenance d'une station de base, d'une signalisation de commande qui planifie une transmission d'un ou plusieurs messages de liaison montante depuis l'UE ;
une réception (1310), en provenance de la station de base, d'un ou plusieurs paramètres d'agrégation de puissance se rapportant à une commande par l'UE de la puissance d'émission instantanée dans un intervalle de temps pendant lequel une puissance d'émission maximale moyenne est limitée, dans lequel les un ou plusieurs paramètres d'agrégation de puissance comprennent une indication d'au moins un élément parmi une durée maximale pendant laquelle la puissance d'émission instantanée est autorisée à dépasser une limite de puissance d'émission maximale moyenne ;
une détermination (1315), sur la base au moins en partie des un ou plusieurs paramètres d'agrégation de puissance, d'une configuration d'agrégation de puissance pour la transmission des un ou plusieurs messages de liaison montante ; et
une transmission (1320) des un ou plusieurs messages de liaison montante conformément à la configuration d'agrégation de puissance et à la signalisation de commande.

2. Procédé selon la revendication 1, dans lequel une réception des un ou plusieurs paramètres d'agrégation de puissance comprend en outre :
une réception d'une indication d'au moins un élément parmi une taille de l'intervalle de temps ou une limite de puissance d'émission maximale moyenne pour l'intervalle de temps, ou dans lequel une réception des un ou plusieurs paramètres d'agrégation de puissance comprend en outre une réception d'une puissance d'émission maximale minimale garantie pour des transmissions inférieures à la limite de puissance d'émission maximale moyenne, ou dans lequel une réception des un ou plusieurs paramètres d'agrégation de puissance comprend en outre :
une réception d'une indication d'une stratégie de mise à l'échelle de puissance à utiliser par l'UE dans l'application de la configuration d'agrégation de puissance à travers plusieurs porteuses ou bandes de fréquence.

3. Procédé selon la revendication 2, dans lequel une réception de l'indication de la stratégie de mise à l'échelle de puissance comprend en outre :
une réception d'une indication selon laquelle la stratégie de mise à l'échelle de puissance est une stratégie pour réduire la puissance d'émission instantanée de manière égale à travers les multiples porteuses ou bandes de fréquence, conformément à une mise à l'échelle pondérée à travers les multiples porteuses ou bandes de fréquence, ou conformément à un ordre prédéfini à travers les multiples porteuses ou bandes de fréquence.

4. Procédé selon la revendication 1, comprenant en outre :
une détermination d'une puissance d'émission moyenne associée à l'intervalle de temps ; et
une transmission, vers la station de base, d'un rapport qui comprend un ou plusieurs paramètres rapportés qui sont sur la base au moins en partie de la puissance d'émission moyenne.

5. Procédé selon la revendication 4, dans lequel une transmission du rapport comprend en outre :
une transmission des un ou plusieurs paramètres rapportés qui sont indicatifs d'au moins un élément parmi la puissance d'émission moyenne, un paramètre de marge associé à une différence entre la puissance d'émission moyenne et une limite de puissance d'émission maximale moyenne, ou un historique de la puissance d'émission instantanée.

6. Procédé selon la revendication 5, dans lequel les un ou plusieurs paramètres rapportés qui sont indicatifs de l'historique de la puissance d'émission instantanée comprennent un premier paramètre statistique associé à la puissance d'émission instantanée au fil du temps, un second paramètre statistique associé à une activité de transmission de données de liaison montante au fil du temps, ou une combinaison de ceux-ci.

7. Procédé selon la revendication 4, dans lequel une transmission du rapport comprend en outre :
une transmission du rapport via une signalisation de commande de ressources radio, un élément de commande, CE, de commande d'accès au support, MAC, un message d'informations de commande de liaison montante, ou toute combinaison de ceux-ci, ou dans lequel le rapport est associé à une cellule, une bande de fréquence, un groupe de cellules, ou toute combinaison de ceux-ci.

8. Procédé selon la revendication 1, comprenant en outre :
une réception, en provenance de la station de base, d'une indication d'une puissance d'émission demandée pour chacun des un ou plusieurs messages de liaison montante à travers de multiples porteuses, dans lequel une puissance d'émission totale indiquée à travers l'ensemble des multiples porteuses dépasse la puissance d'émission instantanée ;
une détermination d'une configuration de mise à l'échelle de puissance pour la transmission des un ou plusieurs messages de liaison montante de sorte qu'une puissance d'émission totale appliquée à travers l'ensemble des multiples porteuses est égale ou inférieure à la puissance d'émission instantanée.

9. Procédé selon la revendication 8, dans lequel la configuration de mise à l'échelle de puissance comprend un premier paramètre de mise à l'échelle de puissance associé à une première porteuse ou bande d'une configuration d'agrégation de porteuses au niveau de l'UE et un second paramètre de mise à l'échelle de puissance associé à une seconde porteuse ou bande de la configuration d'agrégation de porteuses au niveau de l'UE, ou dans lequel la configuration de mise à l'échelle de puissance est déterminée sur la base au moins en partie d'une puissance de sortie maximale configurée totale pour une occasion de transmission associée à la transmission des un ou plusieurs messages de liaison montante.

10. Procédé de communications sans fil au niveau d'une station de base, comprenant :
une transmission (1505), vers un équipement utilisateur, UE, d'une signalisation de commande qui planifie la transmission d'un ou plusieurs messages de liaison montante depuis l'UE ;
une transmission (1510), vers l'UE, d'un ou plusieurs paramètres d'agrégation de puissance se rapportant à une commande par l'UE de la puissance d'émission instantanée dans un intervalle de temps pendant lequel une puissance d'émission maximale moyenne est limitée dans lequel les un ou plusieurs paramètres d'agrégation de puissance comprennent une indication d'au moins l'un parmi une durée maximale pendant laquelle la puissance d'émission instantanée est autorisée à dépasser une limite de puissance d'émission maximale moyenne ; et
une surveillance (1515) des un ou plusieurs messages de liaison montante conformément aux un ou plusieurs paramètres d'agrégation de puissance et à la signalisation de commande.

11. Procédé selon la revendication 10, dans lequel une transmission des un ou plusieurs paramètres d'agrégation de puissance comprend en outre :
une transmission d'une indication d'au moins un élément parmi une taille de l'intervalle de temps ou une limite de puissance d'émission maximale moyenne pour l'intervalle de temps, ou dans lequel une transmission des un ou plusieurs paramètres d'agrégation de puissance comprend en outre :
une transmission d'une indication d'au moins un élément parmi une durée maximale pendant laquelle la puissance d'émission instantanée est autorisée à dépasser une limite de puissance d'émission maximale moyenne ou une puissance d'émission maximale minimale garantie pour des transmissions inférieures à la limite de puissance d'émission maximale moyenne, ou dans lequel une transmission des un ou plusieurs paramètres d'agrégation de puissance comprend en outre :
une transmission d'une indication d'une stratégie de mise à l'échelle de puissance à utiliser par l'UE dans l'application de la configuration d'agrégation de puissance à travers plusieurs porteuses ou bandes de fréquence, ou comprenant en outre :
une réception, en provenance de l'UE, d'un rapport qui comprend un ou plusieurs paramètres rapportés qui sont sur la base au moins en partie d'une puissance d'émission moyenne.

12. Procédé selon la revendication 11, dans lequel une réception du rapport comprend en outre :
une réception des un ou plusieurs paramètres rapportés qui sont indicatifs d'au moins un élément parmi la puissance d'émission moyenne, un paramètre de marge associé à une différence entre la puissance d'émission moyenne et une limite de puissance d'émission maximale moyenne, ou un historique de la puissance d'émission instantanée.

13. Procédé selon la revendication 12, dans lequel les un ou plusieurs paramètres rapportés qui sont indicatifs de l'historique de la puissance d'émission instantanée comprennent un premier paramètre statistique associé à la puissance d'émission instantanée au fil du temps, un second paramètre statistique associé à une activité de transmission de données de liaison montante au fil du temps, ou une combinaison de ceux-ci.

14. Procédé selon la revendication 11, dans lequel une réception du rapport comprend en outre :
une réception du rapport via une signalisation de commande de ressources radio, un élément de commande, CE, de commande d'accès au support, MAC, un message d'informations de commande de liaison montante, ou toute combinaison de ceux-ci, ou dans lequel le rapport est associé à une cellule, une bande de fréquence, un groupe de cellules, ou toute combinaison de ceux-ci.

15. Appareil de communication comprenant :
un processeur ;
une mémoire couplée avec le processeur ; et
des instructions stockées dans la mémoire et exécutables par le processeur pour amener l'appareil à réaliser les étapes selon l'une quelconque des revendications 1 à 9 ou 10 à 14.
